(19) Europäisches Patentamt
European Patent Office
Office européen des brevets

(11) EP 0 784 072 A1

(12) **DEMANDE DE BREVET EUROPEEN**

(43) Date de publication:
**16.07.1997 Bulletin 1997/29**

(51) Int. Cl.$^6$: **C08L 21/00**, C08K 5/54, C08K 3/36, B60C 1/00

(21) Numéro de dépôt: **97100105.2**

(22) Date de dépôt: **07.01.1997**

(84) Etats contractants désignés:
**AT BE DE ES FR GB IT LU SE**

(30) Priorité: **11.01.1996 FR 9600441**

(71) Demandeur: **COMPAGNIE GENERALE DES ETABLISSEMENTS MICHELIN-MICHELIN & CIE**
**F-63040 Clermont-Ferrand Cédex 01 (FR)**

(72) Inventeurs:
- **Durel, Olivier**
  **63112 Cebazat (FR)**
- **Bomal, Yves**
  **75018 Paris (FR)**

(74) Mandataire: **Hiebel, Robert**
**Michelin & Cie,**
**Service SGD/LG/PI Ladoux**
**63040 Clermont-Ferrand Cedex 01 (FR)**

(54) **Composition de caoutchouc pour enveloppes de pneumatiques à base de silices contenant un additif de renforcement à base de polyorganosiloxane fonctionnalisé et d'un composé organosilane**

(57) Composition de caoutchouc destinée à la fabrication d'enveloppes de pneumatiques ayant des propriétés hystérétiques et une sécurité au grillage améliorées, à base d'au moins un élastomère et de silice à titre de charge renforçante renfermant un additif de renforcement constitué par le mélange et/ou le produit de réaction ⟨in situ⟩ d'au moins un composé polyorganosiloxane fonctionnalisé, comprenant par molécule, au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes de polymère(s).

FIGURE N°1

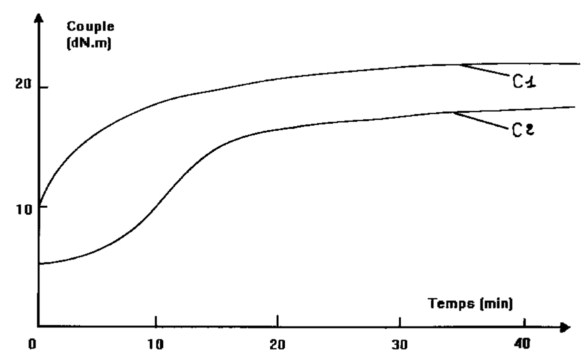


EP 0 784 072 A1

## Description

La présente invention concerne de nouvelles compositions de caoutchouc destinées à la fabrication d'enveloppes de pneumatiques à base de silices précipitées contenant un additif de renforcement à base d'un polyorganosiloxane fonctionnalisé et d'un composé organosilane.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que par exemple des sous-couches, des gommes de calandrage ou de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier entre autres la nature des polymères et copolymères diéniques en fin de polymérisation au moyen d'agents de couplage ou d'étoilage ou de fonctionnalisation. Toutes ces solutions se sont essentiellement concentrées sur l'utilisation des polymères modifiés avec du noir de carbone comme charge renforçante dans le but d'obtenir une bonne interaction entre le polymère modifié et le noir de carbone. On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère et à se désagréger ou se désagglomérer, et se disperser de façon homogène dans l'élastomère. L'usage de charges blanches renforçantes, et de silice notamment, s'est révélé inapproprié en raison du faible niveau de certaines propriétés de telles compositions et par voie de conséquence de certaines propriétés des pneumatiques mettant en oeuvre ces compositions.

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues.

De surcroît, l'usage de la silice soulève des difficultés de mise en oeuvre dues aux interactions silice/silice qui tendent à l'état cru à augmenter la consistance des compositions caoutchouteuses, en tout cas à rendre la mise en oeuvre plus difficile que la mise en oeuvre du noir de carbone.

Enfin, les interactions entre la silice et le système de réticulation, lorsqu'il est à base de soufre, et des accélérateurs habituellement utilisés pour le soufre pénalisent la vitesse et le rendement de la réticulation.

L'intérêt pour les compositions renforcées à la silice a été relancé avec la publication de la demande de brevet européen EP-A-0 501 227 qui divulgue une composition de caoutchouc vulcanisable au soufre obtenue par travail thermo-mécanique d'un copolymère de diène conjugué et d'un composé vinyle aromatique préparé par polymérisation en solution avec 30 à 150 parties en poids pour 100 parties en poids d'élastomère d'une silice précipitée particulière. L'utilisation d'une telle silice a certes réduit les difficultés de mise en oeuvre des mélanges la contenant, à titre majoritaire ou non, à titre de charge renforçante mais la mise en oeuvre de telles compositions caoutchouteuses reste néanmoins plus difficile que la mise en oeuvre du noir de carbone.

Il est connu de l'homme de l'art qu'il est nécessaire d'utiliser un agent de couplage ou de liaison qui réagit avec la silice pour créer de bonnes interactions entre la surface de la silice et l'élastomère tout en facilitant la dispersion de la silice et les compositions décrites dans la demande de brevet européen EP-A-0 501 227 sont également soumises à cette nécessité.

Un objectif de l'homme de l'art consiste à améliorer la mise en oeuvre des compositions de caoutchoucs diéniques comprenant de la silice à titre de charge renforçante destinées à la fabrication d'enveloppes de pneumatiques et, d'autre part, à réduire la quantité d'agent de couplage et/ou de renforcement nécessaire sans dégrader les propriétés de telles compositions.

Ainsi il a été proposé dans le brevet US-A 3.350.345 d'utiliser dans des compositions de caoutchouc comprenant de la silice, un silane hydrolysable et en particulier un mercaptosilane à titre d'agent de couplage élastomère/silice. Il a ensuite été proposé dans la demande de brevet FR-A- 2. 094. 859 d'utiliser les compositions de caoutchouc comprenant de la silice et un mercaptosilane à titre d'agent de couplage pour la fabrication de bandes de roulement de pneumatiques en raison des propriétés améliorées exhibées par de telles compositions. Il fut rapidement mis en évidence et connu de l'homme de l'art que les mercaptosilanes et en particulier le γ-mercaptopropyltriméthoxysilane et le γ-mercaptopropyltriéthoxysilane étaient susceptibles de procurer les meilleures propriétés de couplage silice/élastomère mais que l'utilisation industrielle de ces agents de couplage n'était pas possible en raison de la forte réactivité des fonctions SH conduisant très rapidement au cours de la préparation de composition dans un mélangeur interne à des vulcanisations prématurées, appelées encore ⟨⟨grillage⟩⟩ (scorch), à des plasticités Mooney très élevées et en fin de compte à des compositions quasi-impossibles à travailler et à mettre en oeuvre industriellement.

Pour illustrer cette impossibilité d'utiliser industriellement de tels agents de couplage et les compositions les contenant, on peut citer la demande de brevet FR-A-2. 206. 330 ainsi que le brevet US-A-4. 002.594.

Pour remédier à cet inconvénient, il a été proposé dans la demande de brevet FR-A- 2. 206. 330, d'utiliser à titre d'agent de couplage des organosilanes polysulfurés parmi lesquels le tétrasulfure de bis 3- triéthoxysilylpropyle, qui s'avèrent apporter le meilleur compromis, pour des vulcanisats chargés à la silice, en terme de sécurité au grillage, de facilité de mise en oeuvre et de pouvoir renforçant. Cependant, cet agent de couplage est fort onéreux et doit être utilisé en une quantité relativement importante, de l'ordre de 2 à 3 fois plus importante que la quantité de $\gamma$-mercaptopropyltriméthoxysilane nécessaire pour obtenir des niveaux de propriétés de couplage équivalentes.

Par conséquent, il apparaît donc souhaitable d'un point de vue économique, de pouvoir élaborer industriellement des compositions de caoutchouc renforcées à la silice, comprenant des taux faibles d'additifs de renforcement, aussi performants que les mercaptosilanes, mais tout en évitant un grillage prématuré et des problèmes de mise en oeuvre liés à une viscosité trop importante des compositions.

Une tentative en ce sens a été décrite dans le brevet US-A-4. 474. 908 qui divulgue l'utilisation à titre d'additif de renforcement d'une composition de caoutchouc, le mélange d'un mercaptosilane et d'un alkoxysilane.

Mais cette voie ne remédie pas de manière satisfaisante au problème de grillage et de mise en oeuvre et elle est en outre onéreuse.

Une autre tentative a été décrite dans la demande de brevet japonais JP-A-06.248.116 qui divulgue des compositions de caoutchouc destinées à la fabrication d'enveloppes de pneumatiques comprenant à titre de charge renforçante un coupage de noir de carbone et de silice traitée en surface avec des huiles silicones non fonctionnalisées, (généralement et usuellement dénommées PDMS par l'homme de l'art) ainsi qu'un silane à titre d'agent de couplage. Cette voie ne permet pas de résoudre le problème posé à l'homme de l'art, que la charge consiste en un coupage noir/silice ou uniquement silice. En effet, la solution décrite dans cette demande impose le traitement préalable de la silice avec l'huile silicone à une température élevée (250°C environ) et pendant une durée prolongée (environ 1 heure) avant son incorporation à l'élastomère et à l'agent de couplage.

La présente invention remédie au problème posé par l'emploi dans des compositions de caoutchouc, à base d'au moins un élastomère, destinées à la fabrication d'enveloppe de pneumatiques ayant des propriétés hystérétiques améliorées et comprenant de la silice à titre de charge renforçante, d'un additif de renforcement constitué par le mélange et/ou le produit de réaction 《in situ》 d'au moins un composé polyorganosiloxane fonctionnalisé comprenant par molécule au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes d'élastomère(s).

La présente invention a également pour objet l'utilisation pour la fabrication d'enveloppes des pneumatiques d'une composition de caoutchouc à base d'au moins un élastomère, comprenant de la silice à titre de charge renforçante et un additif de renforcement constitué par le mélange et/ou le produit de réaction 《in situ》 d'au moins un composé polyorganosiloxane fonctionnalisé comprenant par molécule au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes d'élastomère(s).

La présente invention a également pour objet des constituants semi-finis utilisables dans la fabrication de pneumatiques, notamment de bandes de roulement, ainsi que des pneumatiques possédant une résistance au roulement améliorée obtenus par la mise en oeuvre d'une composition de caoutchouc selon l'invention renfermant de la silice à titre de charge renforçante.

La présente invention a également pour objet un procédé pour améliorer les propriétés hystérétiques de compositions de caoutchoucs renforcées avec de la silice destinées à la fabrication d'enveloppes de pneumatiques et de produits semi-finis pour enveloppes de pneumatiques.

La présente invention a également pour objet une enveloppe de pneumatique comprenant une composition de caoutchouc comportant au moins un élastomère, de la silice à titre de charge renforçante et un additif de recouvrement, caractérisée en ce que l'additif de recouvrement est constitué par au moins un composé polyorganosiloxane fonctionnalisé comprenant par molécule au moins un motif siloxyle fonctionnel capable de se lier chimiquement et/ou physiquement avec les sites hydroxylés de surface présents sur les particules de silice.

La présente invention a enfin pour objet un procédé permettant de retarder substantiellement le grillage de compositions de caoutchoucs diéniques destinées à la fabrication d'enveloppes de pneumatiques et de produits semi-finis pour enveloppes de pneumatiques lors des phases de préparation et mise en oeuvre desdites compositions.

L'additif de renforcement utilisé dans les compositions de caoutchouc conformes à l'invention comprend d'une part un ou plusieurs composés polyorganosiloxane(s) fonctionnalisé(s) comprenant par molécule un ou plusieurs motif(s) siloxyle fonctionnel(s) capable(s) de se lier chimiquement et/ou physiquement avec les sites hydroxylés de surface des

particules de silice, d'autre part un ou plusieurs composé(s) organosilane(s) fonctionnalisés. Parmi les polyorganosiloxanes fonctionnalisés, conviennent particulièrement ceux dont les motifs siloxyle comportent un substituant fonctionnel hydrolysable ou un ou plusieurs reste(s) H ou OH ayant une réactivité vis à vis de la silice différente du ou des autres substituants(s) fonctionnel(s) récurrent(s) du polyorganosiloxane.

A titre de composés polyorganosiloxanes fonctionnalisés susceptibles de convenir pour la présente invention, on peut choisir tout composé répondant à l'un quelconque des composés suivants:

(A) - les composés comprenant, par molécule,

- $\alpha$ - d'une part, au moins un motif siloxyle fonctionnel de formule:

$$\textbf{(I)} \qquad (R)_a\,Y\,Si\,(O)_{\frac{3-a}{2}}$$

dans laquelle :

a = 0,1 ou 2,

R est un radical hydrocarboné monovalent choisi parmi les alkyles linéaires ou ramifiés, ayant de 1 à 6 atomes de carbone en particulier le méthyle, l'éthyle, le propyle, le butyle, et/ou parmi les aryles et en particulier le phényle, le méthyle étant plus particulièrement préféré, les radicaux R étant identiques ou différents quand a = 2,

Y est un radical alcoxyle linéaire ou ramifié choisi, de préférence, parmi les alcoxyles en $C_1$ - $C_{15}$ , et en particulier $C_1$ - $C_6$ , le méthoxyle, l'éthoxyle et le (iso)propoxyle étant plus particulièrement retenus.

- $\beta$ - et éventuellement d'autre part, au moins un motif siloxyle fonctionnel de formule:

$$\textbf{(II)} \qquad (R)_b\,W\,Si\,(O)_{\frac{3-b}{2}}$$

dans laquelle :

b = 0,1 ou 2,

R répond à la même définition que celle donnée supra pour le substituant R du motif (I) et peut être identique ou différent de ce dernier,

W est un radical hydrocarboné monovalent ayant de 2 à 30 atomes de carbone et éventuellement des atomes de S et/ou O et constituant un reste fonctionnel, relié au silicium par une liaison Si-C, ce reste étant choisi parmi les groupes suivants :

(i) un groupe alkyle, linéaire ou ramifié, comprenant au moins 7 atomes de carbone,
(2i) un groupe alkényle en $C_2$ - $C_{20}$ , linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en $\alpha$,
(3i) un groupe mono ou polycyclique aliphatique saturé ou insaturé comportant 5 à 20 atomes de carbone et une ou plusieurs double(s) liaison(s) éthyléniques dans le ou les cycles, éventuellement relié au silicium par l'intermédiaire d'un radical alkylène, linéaire ou ramifié, en $C_2$ - $C_{10}$ .

- $\gamma$ - et éventuellement d'autre part, au moins un motif siloxyle de formule suivante:

$$\text{(III)} \qquad (R)_c\,(H)_d\,Si\,(O)_{\frac{4-(c+d)}{2}}$$

dans laquelle :

c = 0,1, 2 ou 3, d = 1 et $c + d \leq 3$

les substituants R étant tels que définis ci-dessus dans les motifs (I) et (II)

Selon une terminologie usuelle dans les silicones, les motifs (I) et (II) peuvent être des motifs M, D et T, dans ce dernier cas les polyorganosiloxanes se présentent sous forme de chaînes linéaires réticulées entre elles.

(B) - les composés de formule (IV):

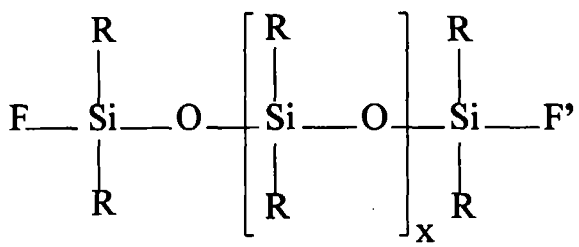

(IV)

dans laquelle :

R est un radical hydrocarboné répondant à la même définition que celle de R donnée supra en légende de la formule (I), ou un groupe alkényle en $C_2$-$C_{20}$ linéaire ou ramifié comportant une ou plusieurs doubles liaisons. Les différents exemplaires de R peuvent être identiques ou différents entre eux,

x = 0 à 500,de préférence x = 0 à 50

F et F' sont des radicaux monovalents choisis parmi l'hydrogène, les halogènes et préférentiellement le chlore, ceux répondant à la définition de R, et/ou des fonctions hydroxyles, alkoxy, énoxy, acyloxy, plus particulièrement acétoxy, oxime, amine; les fonctions hydroxyles, méthoxy et éthoxy étant plus particulièrement préférées. F et F' peuvent être différents ou identiques, mais dans ce dernier cas il ne peut s'agir du radical R, et constituent les substituants fonctionnels des motifs siloxyles fonctionnels.

( C) - les résines polyorganosiloxanes comportant des radicaux monovalents et/ou des fonctions réactives F et F', ces symboles ayant la même définition que celle donnée supra en légende de la formule (IV).

Les polyorganosiloxanes (A) sont remarquables en ce que le substituant fonctionnel Y est hydrolysable et permet le greffage sur la silice tandis que le substituant fonctionnel W éventuellement présent est plus difficilement hydrolysable que le substituant fonctionnel Y et est susceptible d'exprimer diverses propriétés en fonction de sa nature chimique.

A titre préférentiel le substituant W du motif de formule (II) est choisi parmi les radicaux suivants:

- un radical (i) comprenant de 10 à 30 atomes de carbone et choisi de préférence parmi les radicaux alkyles suivants: dodécyle, undécyle, tridécyle;
- un radical (2i) en $C_6$ - $C_{10}$ , comportant une double liaison, et de préférence une autre conjuguée ou non à la première;
- un groupe (3i) monocyclique ou polycyclique aliphatique saturé ou insaturé comportant 5 à 20 atomes de carbone, plus particulièrement le cyclohexyle, le cyclohexényle ou des bicycles issus du norbonène ou du dicyclopentadiène, éventuellement relié au silicium par l'intermédiaire d'un radical alkylène linéaire ou ramifié, en $C_2$-$C_6$.

Il convient de souligner que dès lors qu'un motif d'un type donné (I, II ou III), est présent dans le polyorganosiloxane à plus d'un exemplaire, les différents exemplaires peuvent être identiques ou différents entre eux. On peut même avantageusement tirer profit de cette pluralité. Par exemple des polyorganosiloxanes fonctionnalisés portant à la fois des

fonctions éthoxyle et méthoxyle comme fonctions Y, permettront à l'homme de l'art de moduler la vitesse de réaction avec la silice en fonction des pourcentages respectifs des deux fonctions.

Compte tenu des valeurs que peuvent prendre les indices a à d attribués aux substituants dans les motifs (I), (II), (III), on doit comprendre que les polyorganosiloxanes peuvent présenter une structure linéaire et/ou ramifiée et/ou cyclique.

Les radicaux R préférés sont: le méthyle, l'éthyle, le n-propyle, l'isopropyle ou le n-butyle. Plus préférentiellement encore, au moins 80% en nombre des radicaux R sont des méthyles.

Les radicaux alcoxyles Y préférés sont les éthoxyles.

A titre des polyorganosiloxanes préférentiels concernés par l'invention, on mentionne tout d'abord ceux formés par des copolymères linéaires statistiques, séquencés ou à bloc, de formule moyenne suivante (V):

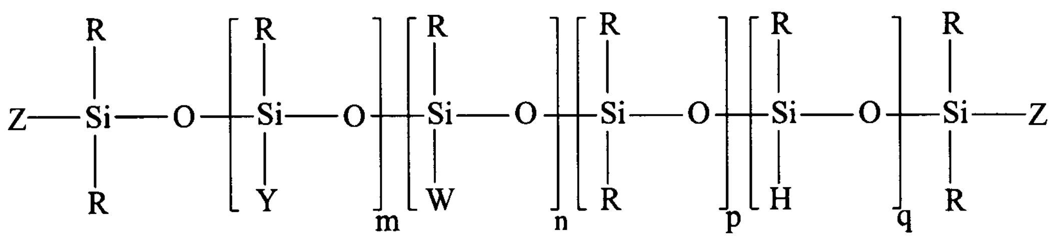

**(V)**

dans laquelle :

les symboles Y, W et R sont tels que définis supra.

le symbole Z est un radical monovalent choisi parmi les radicaux formés par l'hydrogène et parmi ceux répondant aux définitions de R, Y et W.

la somme $m + n + p + q \geq 3$ , de préférence comprise entre 3 et 100; le cas de figure dans lequel $p = q = 0$ , $m \geq 1$ et $n \leq 50$ étant plus particulièrement préféré,

$0 \leq m \leq 100$, de préférence $1 \leq m \leq 50$
$0 \leq n \leq 100$, de préférence $1 \leq n \leq 50$
$0 \leq p \leq 20$, de préférence $0 \leq p \leq 10$
$0 \leq q \leq 40$, de préférence $0 \leq q \leq 10$
avec les conditions selon lesquelles :

. si $m = 0$, au moins l'un des substituants Z correspond à un radical répondant à la définition caractérisant Y
. si $m = n = 0$ et $p + q \geq 1$ , alors l'un au moins des substituants Z correspond à un radical répondant à la définition caractérisant Y.

Parmi les polyorganosiloxanes de formule (V), plus particulièrement préférés, on peut citer ceux pour lesquels $p = q = 1$ et $0.5 \leq m/n \leq 5$ , de préférence $1 \leq m/n \leq 3$ .

A titre d'exemples de polyorganosiloxanes fonctionnalisés linéaires, on peut citer les composés répondant aux formules suivantes :

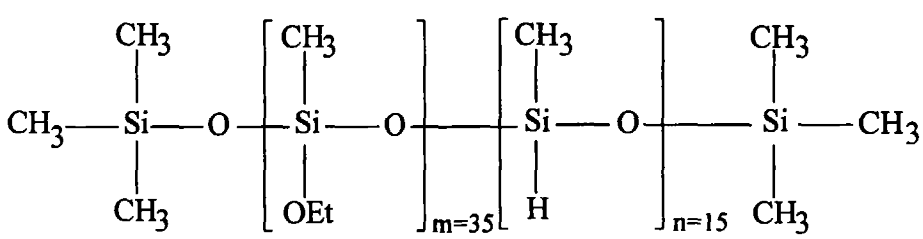

**(V-1)**

avec en moyenne m: 35 et n: 15

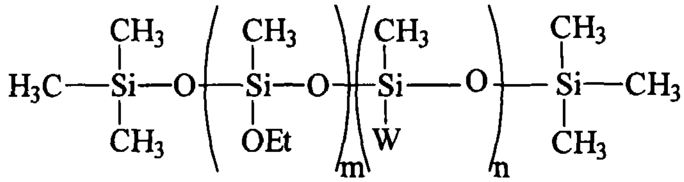

(V-2

Avec en moyenne m: 29 et n: 15 et W correspondant à: $-(CH_2)_7-CH_3$

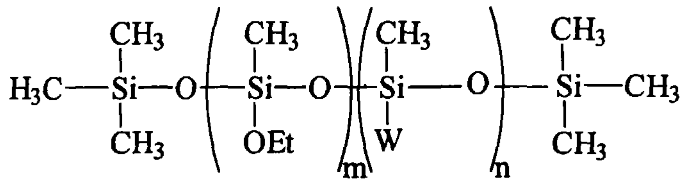

(V-3

Avec en moyenne m: 23 et n: 8.5 et W correspondant à: $-(CH_2)_4-CH{=}CH_2$

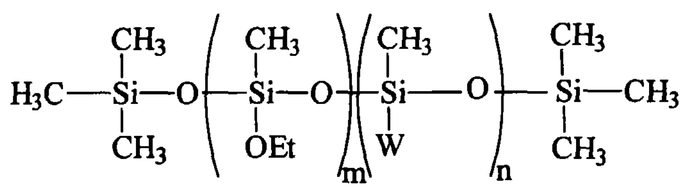

(V-4

Avec en moyenne m: 35 et n: 16 et W correspondant à:

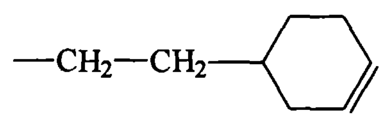

Une alternative à la structure linéaire des polymères de formule (V) définis ci-dessus, se rapporte aux polyorganosiloxanes constitués par des copolymères cycliques de formule moyenne suivante :

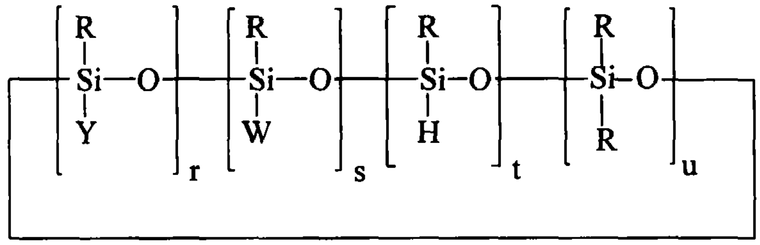

(VI)

dans laquelle :

Y, W et R sont tels que définis supra, et avec r, s, t, et u représentant des nombres entiers ou décimaux positifs,

la somme $r + s + t + u \geq 3$ , de préférence comprise entre 4 et 8, le cas de figure dans lequel $t = u = 0$ étant plus particulièrement préféré,

- $1 \leq r \leq 8$, de préférence $1 \leq r \leq 4$
- $1 \leq s \leq 8$, de préférence $1 \leq s \leq 4$
- $0 \leq t \leq 8$, de préférence $0 \leq t \leq 4$
- $0 \leq u \leq 8$, de préférence $0 \leq u \leq 4$

De préférence, les polyorganosiloxanes sont constitués par des produits correspondants à ceux pour lesquels R = $CH_3$ et $p = u = 0$ et $q = t = 0$ dans les formules (V) et (VI) définies ci-dessus.

Il va de soi que dans ces formules (V) et (VI) comme déjà indiqué ci-dessus, les radicaux W peuvent être de nature identique ou différente quand $n > 1$ et $s > 1$.

Plusieurs polyorganosiloxanes du type de ceux définis ci-dessus peuvent bien sûr être utilisés dans le cadre de la présente invention.

Ces polyorganosiloxanes et notamment les polyorganosiloxanes plurifonctionnels sont obtenus selon un procédé consistant, d'une part, à faire réagir un polyorganosiloxane de départ comprenant des motifs de formule (II) tels que définis supra, dans lesquels W représente l'hydrogène, avec au moins un alcool dont dérive la fonctionnalité Y du motif (I), et utile à la fois comme réactif et comme solvant réactionnel, en présence d'un catalyseur dont au moins l'un des éléments actifs est choisi parmi les métaux de transition, selon un mécanisme de déshydrogénocondensation (1ère phase),

et d'autre part, à mettre en oeuvre l'addition du polyorganosiloxane transformé par déshydrogénocondensation sur au moins un composé oléfinique dont dérive la fonctionnalité W du motif (II) selon un mécanisme d'hydrosilylation (2e phase), en présence d'un catalyseur et de préférence à une température comprise entre 5 et 100°C et plus préférentiellement encore entre 5 et 70°C.

De façon privilégiée, les alcools mis en oeuvre sont des alcanols linéaires ou ramifiés monohydroxylés (primaire, secondaire, ou tertiaire, de préférence primaire), choisis de préférence parmi la liste suivante : méthanol, éthanol, (iso)propanol, (n) butanol, l'éthanol étant préféré.

Concernant le catalyseur, il est avantageusement choisi parmi ceux contenant au moins l'un des éléments suivants: Pt, Rh, Ru, Pd, Ni et leurs associations, ce catalyseur étant éventuellement couplé à un support inerte ou non.

Selon une disposition préférée de l'invention, le catalyseur est pris dans la famille des catalyseurs au platine utilisés traditionnellement pour réaliser des réactions d'hydrosilylation. Ces catalyseurs platiniques sont amplement décrits dans la littérature. On peut en particulier citer les complexes du platine et d'un produit organique décrits dans les brevets américains US-A-3 159 601, US-A-3 159 602, US-A-3 220 972 et les brevets européens EP-A-57 459, EP-188 978 et EP-A-190 530 ainsi que les complexes du platine et d'organopolysiloxane vinylé décrit dans les brevets américains US-A-3 419 593, US-A-3 715 334, US-A-3 377 432 et US-A-3 814 730. Le catalyseur de karstedt est un exemple de catalyseur platinique approprié pour le procédé selon l'invention. (Brevet US-A-3 775 452 Karstedt).

Les catalyseurs à base de nickel, comme par exemple le nickel de raney, constituent une alternative possible aux catalyseurs platiniques.

S'agissant des conditions réactionnelles, la désydrogénocondensation peut être réalisée dans une large gamme de température allant, par exemple, de 0 à 200°C, mais il est clair que l'on préfère qu'elle s'effectue à une température comprise entre 10 et 50°C de préférence entre 18 et 35°C.

La deuxième phase du procédé selon l'invention consiste en une réaction d'addition du polyorganosiloxane intermédiaire hydrogéné et produit par deshydrogénocondensation, sur au moins un composé oléfinique porteur d'au moins une liaison $\pi$.

Il s'agit d'un mécanisme d'hydrosilylation, en présence d'un catalyseur et, de préférence, à une température comprise entre 5 et 100°C et plus préférentiellement encore entre 5 et 70°C.

Selon une méthodologie préférée, on initie l'hydrosilylation en ajoutant le composé oléfinique dont dérive le radical W tel que défini ci-dessus, au polyorganosiloxane alcoxylé intermédiaire une fois que la déshydrogénocondensation est terminée. En pratique, cet ajout peut se faire lorsque le dégagement d'hydrogène a cessé.

L'alcène réactif peut être formé par un mélange de produits comportant une seule ou plusieurs espèces précurseurs de radicaux W, qui déterminent la multifonctionnalité du polyorganosiloxane final. Dans le cas où l'on prévoit plusieurs espèces W, on laisse, de préférence, d'abord réagir l'alcène correspondant à la seconde fonctionnalité, puis une fois que celui-ci a totalement réagi, on incorpore l'alcène correspondant à la troisième fonctionnalité et ainsi de suite.

Au lieu d'être incorporé au milieu réactionnel après la déshydrogénocondensation, le composé oléfinique précurseur de W peut être mis en oeuvre avant que ne débute cette première phase du procédé, ou bien encore pendant celle-ci.

Les composés oléfiniques mis en oeuvre, peuvent être aisément déduits de la définition de W donnée ci-avant. Le

choix quant à ce radical est déterminé par les applications visées (une ou plusieurs fonctionnalités différentes).

La phase d'hydrosilylation peut se dérouler, avantageusement, à température ambiante et en masse ou en solution, par exemple dans l'alcool qui a servi de solvant à la réaction de déshydrogénocondensation.

En fin de réactions, les polyorganosiloxanes bruts qui sont obtenus peuvent être purifiés notamment par passage sur une colonne remplie d'une résine échangeuse d'ions et/ou par simple dévolatilisation des réactifs introduits en excès et éventuellement du solvant mis en oeuvre, par un chauffage opéré entre 100 et 180°C sous pression réduite.

Avantageusement, le polyorganosiloxane de départ est sélectionné parmi ceux répondant à la formule suivante:

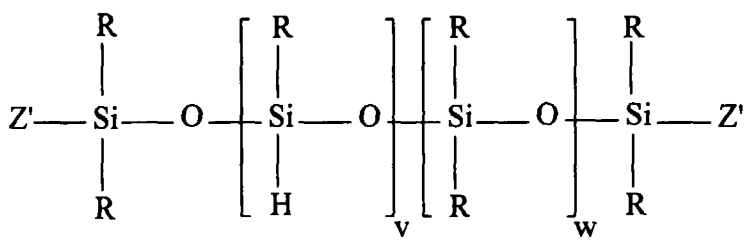

**(VII)**

dans laquelle :

Les symboles R sont identiques ou différents et sont tels que définis supra en légende à la formule des motifs (I) et (II),

les symboles Z' sont identiques ou différents et correspondent à R ou à l'hydrogène,

v est un entier ou un décimal $\geq 0$ définissable comme suit: $v = n + m + p$ ; n, m et p répondant aux définitions données supra en légende de la formule du motif (V), avec la condition selon laquelle si $v = 0$, alors $w \geq 1$ et les deux radicaux Z' correspondent à l'hydrogène,

w répond à la même définition que celle de p donnée supra en légende de la formule du motif (V).

Les polyorganosiloxanes de départ servant, par exemple, à la préparation des produits fonctionnalisés cycliques sont ceux sélectionnés parmi ceux répondant à la formule moyenne suivante:

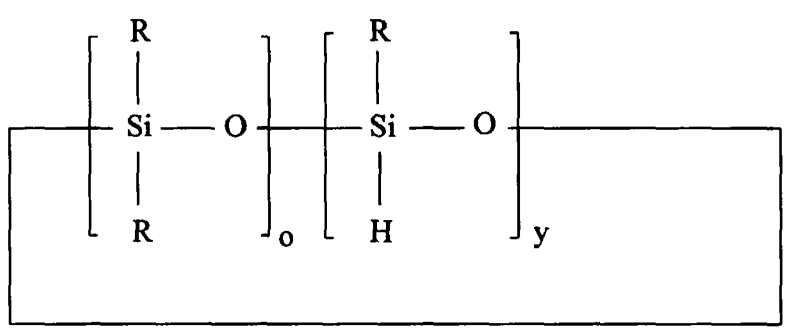

**(VIII)**

dans laquelle :

Les symboles R sont identiques ou différents et sont tels que définis supra, en légende à la formule des motifs (I) et (II),

o répond à la même définition que celle de u donnée supra, en légende de la formule du motif (VI),

y est un entier ou un décimal $\geq 0$, définissable comme suit: $y = r + s + t$ et $y + u \geq 3$ ; r, s, t et u répondant aux définitions données supra en légende de la formule du motif (VI).

A titre d'exemples de composés (B), conviennent préférentiellement:

Les polydiméthylsiloxanes terminés par des silanols tels que les produits commerciaux suivants fabriqués par Huls

America Inc. figurant au catalogue 1994 de la société ABCR - Roth - Sochiel Sarl sous les références:

**PS 340**

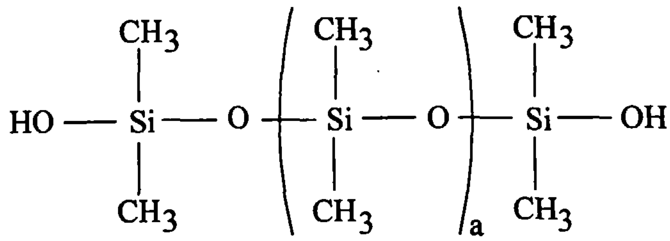

avec a représentant un nombre entier positif, pour donner une masse moyenne en poids entre 400 et 700.

**PS 341**

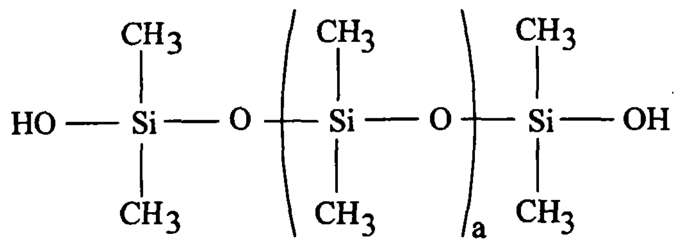

avec a représentant un nombre entier positif, pour donner une masse moyenne en poids de 4200.

Les polydiméthylsiloxanes terminés par des groupes éthoxy tels que les produits fabriqués par HULS America INC. et figurant au catalogue 1994 de la société ABCR - Roth-Sochiel SARL sous la référence:

**PS 395**

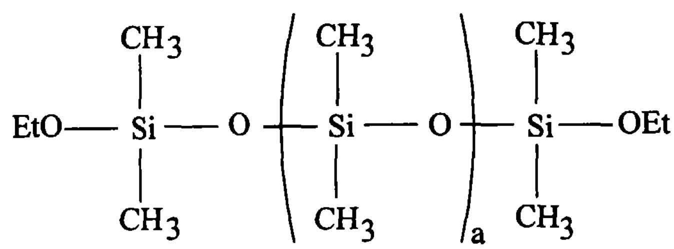

avec a représentant un nombre entier positif, pour donner une masse moyenne en poids entre 700 et 1200.

Les composés ( C ) sont des résines polyorganosiloxanes constituées de petits réseaux macromoléculaires d'un ou plusieurs cycle(s) de par la présence dans la molécule de motifs M, D, T ou Q, selon une terminologie usuelle dans les silicones, et comportant des radicaux monovalents et/ou des fonctions réactives.

A titre d'exemple de telles résines, on peut citer les composés répondant à la formule:

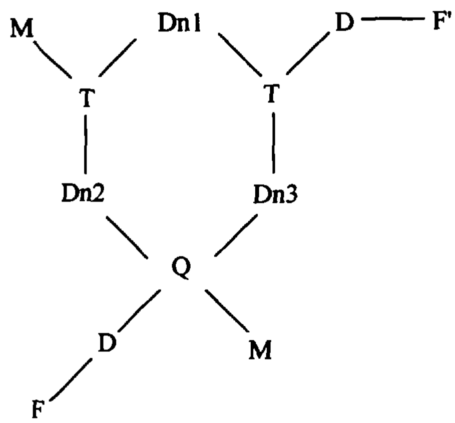

(IX)

dans laquelle :

n désigne le nombre de motifs D dans chaque maillon du cycle:
$0 \leq n1, n2, n3 \leq 20$

F et F' sont des radicaux monovalents choisis parmi l'hydrogène, le chlore, ceux répondant à la définition de R, et/ou des fonctions hydroxyles, alkoxy, énoxy, acyloxy, plus particulièrement acétoxy, oxime, amine ; les fonctions hydroxyles, méthoxy et éthoxy étant plus particulièrement préférées; F et F' peuvent être différents ou identiques, mais dans ce dernier cas il ne peut s'agir du radical R.

Il va de soi que le nombre de maillons de chaque cycle peut être supérieur à 3, de même que le nombre de motifs F peut être bien supérieur à 2 en étant de même nature ou de natures différentes.

A titre d'exemple de telles résines, on peut citer les résines MQ, les résines MDQ, les résines DT et les résines MDT, ayant une teneur pondérale en groupe hydroxyle ou alcoyle comprise entre 1 et 6 %.

On peut utiliser plus particulièrement les résines présentant une masse moléculaire inférieure à 25000.

A titre d'exemple préférentiel des composés (C), on peut citer la résine polyorganosiloxane 4509, commercialisée par la société Rhône-Poulenc dont le pourcentage molaire des différents motifs M; D;T est :
M = 15 %, D = 25 %, T = 60 %
et le pourcentage en volume de fonctions hydroxyles = 0,5 %.

Enfin, il est possible dans le cadre de l'invention d'utiliser un mélange d'au moins deux des polyorganosiloxanes A, B et C.

A titre de composés organosilanes, utilisables dans le cadre de l'invention, conviennent un ou plusieurs composés répondant à l'une au moins des quatre formules générales (X) à (XIII) suivantes :

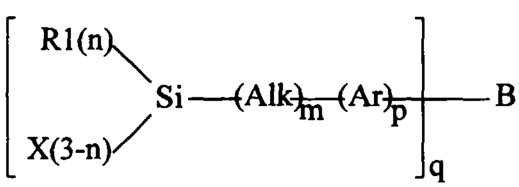

(X)

dans laquelle :

R1 représente un groupe alkyle contenant 1 à 10 atome(s) de carbone, ou encore le radical phényle,

X représente un groupe hydrolysable choisi parmi :

- les halogènes de préférence le chlore,
- les radicaux alkoxy ou cycloalkoxy,

- les radicaux acyloxy,

après hydrolyse, X peut éventuellement représenter un groupe hydroxyle (OH).

$0 \leq n \leq 2$

(Alk) représente un groupe hydrocarboné, divalent, choisi parmi les alkyles linéaires ou ramifiés, ayant de 1 à 10 atomes(s) de carbone et avantageusement de 1 à 6,

m représente 0 ou 1,

(Ar) représente un groupe hydrocarboné, choisi parmi les aryles, ayant de 6 à 12 atomes de carbone et de préférence 6 à 8,

p représente 0 ou 1, avec la condition que p et m ne soient pas égaux à 0 simultanément.

q = 1 ou 2,

B représente un groupe capable de former une liaison avec au moins un des élastomères de la composition de caoutchouc.
Les groupes B préférés sont les groupes mercapto (SH) pour q=1 et les groupes polysulfures (Sx) et disulfure ($S_2$) pour q=2.
Cependant le groupe B peut aussi inclure d'autres groupes capables de réaction avec le polymère caoutchouteux, par exemple:

B représente :

- si q=2 : un groupe fonctionnel polysulfuré choisi parmi les groupes suivants:
  —Sx— avec $1 \leq x \leq 8$, x étant un nombre entier positif

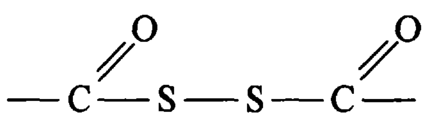

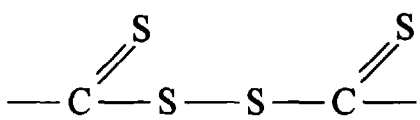

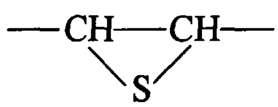

- si q=1 : un groupe fonctionnel choisi parmi les groupes suivants:
  —SH

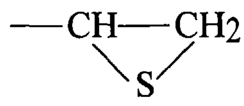

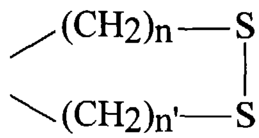

avec 1 ≤ n, n'≤ 6 et n pouvant être égal à n'

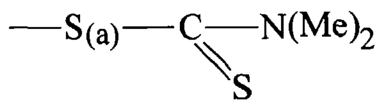

avec 1 ≤ a ≤ 8

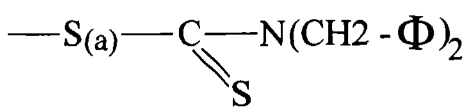

avec 1 ≤ a ≤ 8

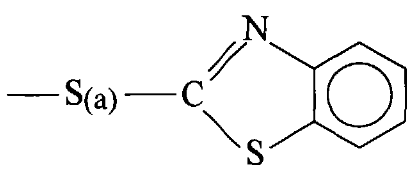

avec 1 ≤ a ≤ 8

—S—Z avec Z étant un reste halogène et de préférence chlorure ou bromure ou une fonction azotée de préférence amine ou amide.

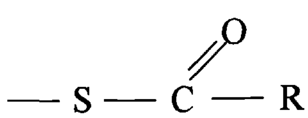

R : alkyle ou alkényle, cycliques ou acycliques, et aryle.

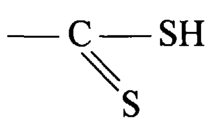

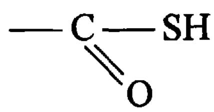

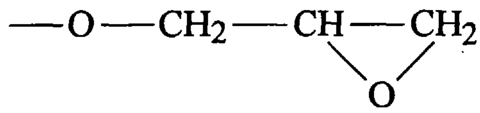

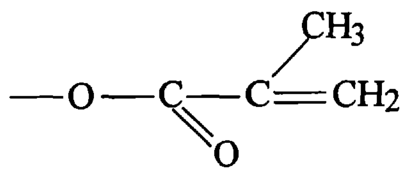

$-NH_2$
$-N_3$

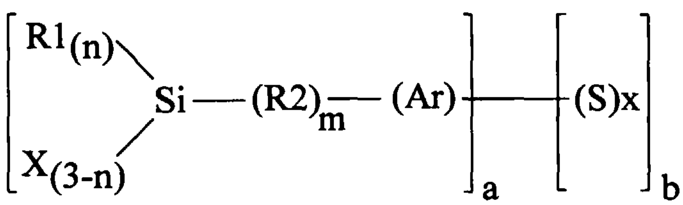 (XI)

dans laquelle :

R1 et X répondent à la même définition que celle donnée supra en légende de la formule (X),
$0 \leq n \leq 2$,

(R2) représente un groupe hydrocarboné, divalent, choisi parmi les alkyles et alkylenoxy linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone,

$(S)_x$ est un radical polysulfuré divalent, chaque valence libre étant directement liée à un atome de carbone d'un cycle aromatique, plusieurs cycles aromatiques pouvant être reliés entre eux par le radical $(S)_x$
$2 \leq x \leq 6$,
$a \geq 2$ et $b \geq 1$ avec $0.4 \leq a/b \leq 2$

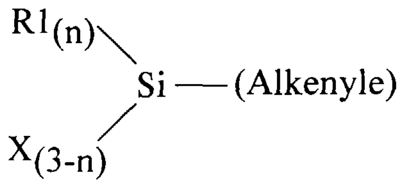

**(XII)**

dans laquelle :

R1 et X répondent à la même définition que celle donnée supra en légende de la formule (X),
$0 \leq n \leq 2$,

Alkenyle représente un groupe hydrocarboné, linéaire ou ramifié, cyclique ou non, comportant une ou plusieurs doubles liaisons, ayant de 2 à 20 atomes de carbone et de préférence de 2 à 6. Les doubles liaisons sont de préférence conjuguées et/ou associées au moins à un groupement activateur situé en $\alpha$.

Cette famille d'agent de liaison correspondant à la formule (XII) est de préférence utilisée dans des compositions de caoutchouc avec au moins un initiateur radicalaire, de préférence constitué par au moins un peroxyde.

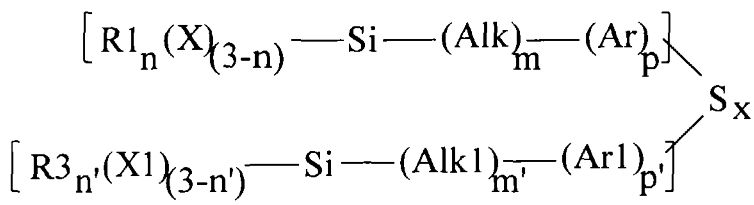

**(XIII)**

dans laquelle :

Les symboles R1, R3, X, X1, Alk, Alk1, n, n', m, m', Ar, Ar1, p, p' sont identiques ou différents et répondent à la même définition que celle donnée supra en légende de la formule (X),

$1 \leq x \leq 8$, Sx représente donc un radical mono, di ou polysulfure,

avec la condition de ne pas avoir simultanément, n = n' ; m = m' ; p = p' ; X = X1; R1 = R3; Alk = Alk1 et Ar = Ar1.

Des exemples de composés organosilanes commerciaux sont donnés dans le tableau ci-dessous. Bien entendu, l'invention n'est pas limitée à ces composés.

| Nom chimique | Formule | Nom commercial/fournisseur |
|---|---|---|
| 3-Mercapto propyltriméthoxysilane | $HS(CH_2)_3Si(OCH_3)_3$ | A-189 / OSI |
| 3-Mercapto propyltriéthoxysilane | $HS(CH_2)_3Si(OC_2H_5)_3$ | Dynasylan3201/HULS |
| Vinyltriéthoxysilane | $C_2H_3Si(OC_2H_5)_3$ | Dynasylan VTEO/HULS |
| 3-Aminopropyltriéthoxysilane | $NH_2(CH_2)_3Si(OC_2H_5)_3$ | A-1100/OSI |
| 3-Méthacryloxypropyltriméthoxysilane | $CH_2CCH_3COO(CH_2)_3Si(OCH_3)_3$ | A- 174/OSI |
| Mercaptométhyldiméthyléthoxysilane | $HSCH_2Si(CH_3)_2(OC_2H_5)$ | M8200/ABCR |
| Bis(-triéthoxysilylpropyl-) tétrasulfure | $[(C_2H_5O)_3Si(CH_2)_3S_2]_2$ | Si 69/DEGUSSA |
| Bis(-triméthoxysilylpropyl-) tétrasulfure | $[(CH_3O)_3Si(CH_2)_3S_2]_2$ | Si 167 / DEGUSSA |
| 3-chloropropyltriméthoxy silane | $(CH_3O)_3Si(CH_2)_3Cl$ | Si 130/ DEGUSSA |
| 3-thiocyanatopropyltriéthoxy silane | $(C_2H_5O)_3Si(CH_2)_3SCN$ | Si 264 / DEGUSSA |
| Bis(-triéthoxysilyléthy-tolyl-) trisulfure | $[(C_2H_5O)_3Si(CH_2)_2\text{-}C_6H_5(CH_3)]_2$ $[(S)_3]$ | URC2/OSI |

A titre de silice susceptible d'être mise en oeuvre dans l'invention conviennent toutes les silices précipitées ou pyrogénées connues de l'homme de l'art présentant une surface BET ≤ à 450 $m^2$ /g et une surface spécifique CTAB ≤ 450 $m^2$/g, même si les silices précipitées hautement dispersibles sont préférées.

Par silice hautement dispersible, on entend toute silice ayant une aptitude à la désagglomération et à la dispersion dans une matrice polymétrique très importante observable par microscopie électronique ou optique, sur coupes fines. La dispersibilité de la silice est également appréciée au moyen d'un test d'aptitude à la désagglomération aux ultrasons suivi d'une mesure, par diffraction sur un granulomètre, de la taille des particules de silice pour déterminer le diamètre médian (D50) des particules et le facteur de désagglomération (Fd) après désagglomération comme décrit dans la demande de brevet EP-A-0 520 860 dont le contenu est incorporé ici ou dans l'article paru dans la revue Rubber World, juin 1994, pages 20-24, intitulé 〈〈 Dispersibility measurements of prec. silicas〉〉.

Comme exemples non limitatifs de telles silices hautement dispersibles préférentielles on peut citer celles ayant une surface CTAB égale ou inférieure à 450 $m^2$ /g et particulièrement celles décrites dans les demandes de brevet européen EP-A-0 157 703 et EP-A-0 520 862, dont le contenu est incorporé ici, ou la silice Perkasil KS 430 de la société Akzo, les silices Zeosil 1165 MP et 85 MP de la société Rhône-Poulenc, la silice HI-Sil 2000 de la société PPG, les silices Zeopol 8741 ou 8745 de la Société Huber.

Toutefois, à titre plus préférentiel, conviennent les silices ayant:

- une surface spécifique CTAB comprise entre 120 et 200 $m^2$ /g, de préférence entre 145 et 180 $m^2$ /g,
- une surface spécifique BET comprise entre 120 et 200 $m^2$ /g de préférence entre 150 et 190 $m^2$ /g,
- une prise d'huile DOP inférieure à 300 ml/100g, de préférence comprise entre 200 et 295 ml/100g,
- un diamètre médian (∅ 50), après désagglomération aux ultrasons, égal ou inférieur à 3µm, de préférence inférieur à 2,8µm, par exemple inférieur à 2,5µm,
- un facteur de désagglomération aux ultrasons ($F_D$) supérieur à 10 ml, de préférence supérieur à 11 ml, et plus préférentiellement ≥ 21 ml,
- un rapport spécifique BET/surface spécifique CTAB ≥ 1,0 et ≤ 1,2.

L'état physique sous lequel se présente la silice, c'est-à-dire qu'elle se présente sous forme de poudre, de microperles, de granulés, de billes est indifférent.

Bien entendu par silice, on entend également des coupages de différentes silices. La silice peut être utilisée seule ou en présence d'autres charges blanches. La surface spécifique CTAB est déterminée selon la méthode NFT 45007 de novembre 1987. La surface spécifique BET est déterminée selon la méthode de BRUNAUER, EMMET, TELLER décrite dans 〈〈The Journal of the American Chemical Society, vol. 80, page 309 (1938)〉〉 correspondant à la norme NFT 45007 de novembre 1987. La prise d'huile DOP est déterminée selon la norme NFT 30-022 (mars 1953) en mettant en oeuvre le dioctylphtalate.

Par élastomères susceptibles d'être mis en oeuvre dans les compositions conformes à l'invention, on entend :

1) tout homopolymère obtenu par polymérisation d'un monomère diène conjugué ayant de 4 à 12 atomes de carbone,

2) tout copolymère obtenu par copolymérisation d'un ou plusieurs diènes conjugués entre eux ou avec un ou plusieurs composés vinyle aromatique ayant de 8 à 20 atomes de carbone.

3) les copolymères tertiaires obtenus par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicylclopentadiène;

4) les copolymères obtenus par copolymérisation d'isobutène et d'isoprène (caoutchouc butyle), ainsi que les versions halogénées, en particulier chlorées ou bromées, de ces copolymères.

A titre de diènes conjugués conviennent notamment le butadiène-1,3, le 2-méthyl-1,3-butadiène, les 2,3-di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le chloro-2-butadiène-1,3, le 1,3-pentadiène, le 2,4-hexadiène, etc...

A titre de composés vinyle aromatique conviennent notamment le styrène, l'ortho-, méta, para-méthylstyrène, le mélange commercial "vinyl-toluène", le para-tertiobutyl-styrène, les méthoxy-styrènes, les chloro-styrènes, le vinyl-mésitylène, le divinyl-benzène, le vinyl-naphtalène, etc...

Les copolymères peuvent contenir entre 99 % et 20 % en poids d'unités diéniques et de 1 % à 80 % en poids d'unités vinyl-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être à blocs, statistiques, séquencés, microséquencés, etc... et être préparés en dispersion ou en solution.

A titre préférentiel conviennent les polybutadiènes et en particulier ceux ayant une teneur en unités-1,2 comprise entre 4 % et 80 % et ceux ayant plus de 90 % de liaisons cis-1,4, les polyisoprènes, les copolymères de butadiène-styrène et en particulier ceux ayant une teneur en styrène comprise entre 5% et 50 % en poids et plus particulièrement entre 20 % et 40 % en poids, une teneur en liaisons - 1,2 de la partie butadiénique comprise entre 4 % et 65 %, une teneur en liaisons trans-1,4 comprise entre 30 % et 80 %, ceux ayant une teneur globale en composé aromatique comprise entre 5 % et 50 % et une température de transition vitreuse (Tg) comprise entre 0 °C et - 80 °C et particulièrement ceux ayant une teneur en styrène comprise entre 25 % et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 °C et - 30 °C.

Dans le cas de copolymères de butadiène-styrène-isoprène conviennent ceux ayant une teneur en styrène comprise entre 5 et 50 % et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 85%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 %.

Bien entendu, l'élastomère peut être couplé et/ou étoilé ou encore fonctionnalisé avec un agent de couplage et/ou d'étoilage ou de fonctionnalisation. L'élastomère peut également être du caoutchouc naturel ou un coupage à base de caoutchouc naturel avec tout élastomère, notamment diénique, synthétique.

Les compositions conformes à l'invention contiennent outre un ou plusieurs élastomères et la silice, tout ou partie des autres constituants et additifs habituellement utilisés dans les mélanges de caoutchouc comme des plastifiants, pigments, anti-oxydants, cires anti-ozonantes, un système de réticulation à base soit de soufre, de donneurs de soufre et/ou de peroxyde et/ou de bismaleimides, des accélérateurs de vulcanisation, des huiles d'extension, un ou des agents de recouvrement de la silice tels que des alcoxysilanes, polyols , amines, etc...

Les compositions conformes à l'invention peuvent contenir entre 0,5 à 15 parties en poids de composé(s) polyorganosiloxane fonctionnalisé et de 0,2 à 8 parties en poids de composé(s) organosilane fonctionnalisé.

De manière imprévisible pour l'homme de l'art, il a été découvert que les compositions de caoutchouc conformes à l'invention et comprenant un additif de renforcement constitué par au moins un polyorganosiloxane fonctionnalisé linéaire ou cyclique et au moins un composé organosilane exerçant une liaison gomme / silice, permettent:

- d'utiliser des taux importants d'agents organosilanes appartenant à la famille des mercapto-silanes, sans occasionner de pénalisation en terme de 《sécurité au grillage》 et sans perturber la mise en oeuvre des compositions,
- d'augmenter sensiblement l'efficacité des agents organosilanes et particulièrement ceux du type mercaptosilane,
- de préparer des vulcanisats chargés à la silice présentant une hystérèse améliorée, ce qui rend ces compositions particulièrement utiles pour la fabrication non seulement de pneus mais aussi de produits semi-finis, notamment des bandes de roulement, des sous-couches, des gommes de flancs, des gommes destinées à adhérer aux renforts textiles ou métalliques,
- d'obtenir de bonnes propriétés de mise en oeuvre à cru grâce à une réduction de la viscosité,
- de faciliter l'ajustement du taux d'agent de renforcement gomme/silice (en particulier pour les faibles taux), par l'utilisation de deux produits au lieu d'un, sans être nécessairement pénalisé en terme de mise en oeuvre et de sécurité au grillage,
- d'une manière plus générale, de préparer des vulcanisats chargés à la silice présentant un compromis de propriétés avantageux par rapport aux solutions déjà connues dans l'art.

L'effet bénéfique maximal est obtenu lorsque la silice hautement dispersible constitue la totalité de la charge renforçante. Un effet bénéfique est également obtenu lorsque la silice est utilisée à titre majoritaire ou en coupage avec des silices précipitées classiques, ou encore avec du noir de carbone : comme noirs de carbone, conviennent tous les noirs de carbone, notamment tous les noirs commercialement disponibles et preférentiellement les noirs HAF, ISAF, SAF, etc... conventionnellement utilisés dans les pneus et particulièrement dans les bandes de roulement des pneus. A titre d'exemples non limitatifs de tels noirs, on peut citer les noirs N 134, N 115, N 234, N 339, N 347, N 375 etc... La quantité de noir de carbone présente peut varier dans de larges limites étant toutefois entendu que l'amélioration des propriétés sera d'autant plus importante que le taux de silice présent est élevé. La quantité de noir de carbone présente est préférentiellement égale ou inférieure à 200 % de la quantité de silice présente dans la composition.

L'invention a également pour objet un procédé pour améliorer les propriétés hystérétiques de compositions de caoutchouc comprenant de la silice à titre de charge renforçante destinées à la fabrication d'enveloppes de pneumatiques et de produits semi-finis pour enveloppes de pneumatique, caractérisé en ce qu'il consiste à ajouter aux compositions un additif de renforcement constitué par l'addition et le mélangeage dans n'importe quel ordre, d'au moins un composé polyorganosiloxane fonctionnalisé comprenant par molécule au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes de polymère(s).

L'invention a également pour objet un procédé permettant de retarder substantiellement la vulcanisation prématurée (grillage) de compositions de caoutchouc diéniques destinées à la fabrication d'enveloppes de pneumatiques et de produits semi-finis pour enveloppes de pneumatiques, comprenant de la silice à titre de charge renforçante.

Le procédé selon l'invention consiste à ajouter et à incorporer au caoutchouc de la composition un additif de renforcement pour établir une liaison élastomère/silice, constitué par un composé polyorganosiloxane fonctionnalisé comprenant par molécule au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes de polymère(s).

Les deux constituants de l'additif de renforcement peuvent être ajoutés dans n'importe quel ordre , c'est à dire simultanément ou l'un après l'autre, préférentiellement le composé polyorganosiloxane fonctionnalisé est ajouté en premier avant l'addition du composé organosilane. Il est également possible de faire réagir le polyorganosiloxane avec la silice avant le mélangeage de celle-ci au caoutchouc. Ce procédé permet de rendre industriellement utilisable les mercaptosilanes en retardant l'apparition du phénomène de grillage de la composition contenant la silice à titre de charge renforçante. Cet effet de retarder l'apparition du phénomène de grillage présente un intérêt dans le cas des mercaptosilanes mais également dans le cas d'autres composés organosilanes en ce sens qu'il permet de diminuer la quantité d'organosilane, qui est généralement très onéreux , nécessaire sans affecter significativement le compromis de la composition en terme de sécurité au grillage, de facilité de mise en oeuvre et de pouvoir renforçant. Le procédé selon l'invention est ainsi susceptible de réduire les coûts de fabrication.

Le composé polyorganosiloxane fonctionnalisé exerce une fonction d'agent de recouvrement, par opposition à une fonction de renforcement, lorsqu'il est mélangé à la silice en présence d'au moins un élastomère entrant dans la composition de caoutchouc mise en oeuvre pour fabriquer l'enveloppe de pneumatique. En d'autres termes, la charge siliceuse est revêtue du ou des composé(s) organopolysiloxane (s).

L'invention est illustrée à titre non limitatif par les exemples qui ne sauraient constituer une limitation de la portée de l'invention. Dans les exemples les propriétés des compositions sont évaluées comme suit :

- Viscosité Mooney ML (1+4) à 100 °C mesurée selon la norme AFNOR-NF-T43-005 (Novembre 1980), intitulée Mooney dans les tableaux suivants.

- Modules d'allongement à 300 % (M 300), 100 % (M 100) : mesures effectuées en MPa selon la norme AFNOR-NF-T46-002 (Septembre 1988).

- Résistance à la rupture (FR) en MPa et allongement à la rupture (AR) en % : mesures effectuées à 20°C selon la norme AFNOR-NF-T40-101 (Septembre 1979).

- Pertes hystérétiques (PH) : mesurées par rebond à 60°C au 6e choc et exprimées en %

- Propriétés dynamiques en cisaillement :

Mesures en fonction de la déformation : effectuées à 10 Hertz avec une déformation crête-crête allant de 0,15 % à 50 %. L'hystérèse est exprimée par la mesure de Tg $\delta$ à 7 % de déformation. Le module dynamique (G) pour le plus grand niveau de déformation est exprimé en $N/m^2$. Les mesures sont effectuées selon la norme ASTM D 2231-87:

- Temps de grillage : (T5) exprimé en minutes.

Temps nécessaire pour obtenir une augmentation de la valeur de l'indice consistométrique, exprimé en 〈〈unités Mooney〉〉, de 5 unités au-dessus de la valeur minimale mesurée pour cet indice.
Mesures effectuées à 130°C selon la norme AFNOR-NF-T43-005 (Novembre 1980).

- Caractéristiques rhéométriques :

A partir des courbes de vulcanisation sont déduites les valeurs :

Ts (0,2) : temps en minutes nécessaire à l'augmentation du couple de 0,2 N.m à partir du couple Mooney ML (1+4)100 minimal.
Tc (99) : temps de vulcanisation en minutes correspondant à 99 % du couple obtenu le plus élevé.

Les mesures sont effectuées à 150°C selon la norme AFNOR-NF-T43-015 (août 1975).
Les figures 1 à 4 représentent les courbes de vulcanisation de différentes compositions de caoutchoucs comprenant différents additifs de renforcement. En abscisse, on représente la durée de vulcanisation des compositions exprimée en minutes. En ordonnée, on représente le couple rhéométrique exprimé en décaNewton par mètre (dN/m).
Dans les exemples, les taux de produits sont exprimés en pce: partie pour cent d'élastomère en poids.

Exemple 1

Cet exemple a pour but de comparer deux compositions de caoutchouc identiques à l'exception de l'additif de recouvrement, qui dans le cas de l'essai 1, qui est l'essai témoin, est le Dynasylan 3201 et dans le cas de l'essai 2, conforme à l'invention, est constitué par le Dynasylan 3201 et le polyorganosiloxane (PMHS) fonctionnalisé correspondant à la formule (V-2) indiquée en supra. Ce PMHS fonctionnalisé est préparé comme suit :

Dans un ballon tricol de 500 ml équipé d'une agitation mécanique, d'un thermomètre, et d'une ampoule de coulée, on charge sous atmosphère d'azote 300 ml d'éthanol préalablement séché sur tamis moléculaire 3 Angström, et 10 $\mu$l de catalyseur de KARSTEDT (10 % dans l'hexane). Le mélange est agité et on commence à ajouter goutte à goutte le polyméthylhydrogénoxiloxane (40 g, $dp_n$ = 50). La vitesse de coulée du fluide Si-H est réglée pour contrôler le débit d'hydrogène et l'exothermie de la réaction. En fin de coulée, le mélange est laissé pendant une heure sous agitation. Puis on coule goutte à goutte 36 g d'octène-1. Après addition, on chauffe le mélange réactionnel à 60°C jusqu'à ce que toutes les fonctions Si-H soient consommées. On évapore ensuite l'excès d'alcool et d'octène. On récupère 87 g d'huile limpide et légèrement colorée. L'analyse RMN révèle la structure suivante (RMN) :

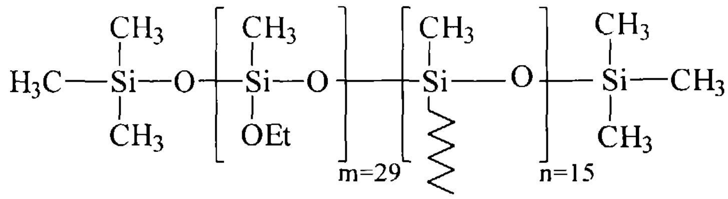

Les polymères diéniques sont mis en oeuvre par un travail thermomécanique en deux étapes dans un mélangeur interne qui durent respectivement 5 et 4 minutes avec une vitesse moyenne des palettes de 45t/min, jusqu'à atteindre une température maximale de tombée de 160°C suivies d'une étape de finition effectuée à 30°C sur mélangeur externe sous les formulations suivantes:

Tableau 1

| N° Composition | 1 | 2 |
|---|---|---|
| **SBR (1)** | 96 | 96 |
| **PB (2)** | 30 | 30 |
| **Silice (3)** | 80 | 80 |
| **ZnO** | 2,5 | 2,5 |
| **Acide stéarique** | 2 | 2 |
| **Anti-Oxydant (4)** | 1,9 | 1,9 |
| **PMHS (5)** | | 4,5 |
| **Dynasylan 3201 (6)** | 2,8 | 2 |
| **Huile Aromatique** | 6 | 6 |
| **Soufre** | 1,1 | 1,1 |
| **CBS (7)** | 2 | 2 |
| **DPG (8)** | 1,5 | 1,5 |

(1) : SBR ayant 59,5% de liaisons 1-2; 23% de liaisons trans; 26% de styrène incorporè et ètendu avec 37,5 % d'huile;
(2) : PB ayant 4,3% de liaisons 1-2; 2,7% de liaisons trans; 93% de liaisons cis 1-4
(3) : Silice Zeosil 1165 MP de la sociètè Rhône-Poulenc
(4) : N1 - 3 dimèthylbutyl-N-phenyl-para-phenylènediamine
(5) : PMHS fonctionnalisè correspondant à la formule (V-2)
(6) : γ mercapto-propyltrièthoxysilane commercialisè par la sociètè HULS
(7) : N - cyclohexyl-2-benzothiazyl-sulfènamide
(8) : Diphènylguanidine

Les résultats des propriétés de caoutchouterie mesurées avant cuisson (Mooney) et les rhéogrammes à 150°C sont présentés respectivement au tableau 2 et à la figure 1.

Tableau 2

| N° Composition | 1 | 2 |
|---|---|---|
| **Propriétés avant cuisson** | | |
| **Mooney** | 137 | 90 |
| **T5 (min)** | 3,5 | 22,5 |

Sur la figure 1, la courbe C1 correspond à la composition 1 de référence avec le mercaptosilane seul, la courbe C2 correspond à la composition 2 conforme à l'invention. Les résultats de temps de grillage, ainsi que les rhéogrammes de la figure 1 montrent que l'invention permet d'accroître considérablement la sécurité au grillage. De plus, l'invention facilite la mise en oeuvre des compositions de caoutchouterie contenant un mercaptosilane.

Exemple 2 :

Cet exemple a également pour but de montrer la nécessité et l'intérêt d'utiliser simultanément un agent de liaison avec un PMHS fonctionnalisé. On réalise 2 compositions identiques à celles de l'exemple 1 à l'exception des taux en PMHS et Dynasylan 3201.

TABLEAU 3

| N° Composition | 3 | 4 |
|---|---|---|
| **SBR** | 96 | 96 |
| **PB** | 30 | 30 |
| **Silice** | 80 | 80 |
| **ZnO** | 2.5 | 2.5 |
| **Acide stéarique** | 2 | 2 |
| **Anti-Oxydant** | 1.9 | 1.9 |
| **Huile aromatique** | 6 | 6 |
| **PMHS** | 5 | 5 |
| **Dynasylan 3201** | | 1.5 |
| **Soufre** | 1.1 | 1.1 |
| **CBS** | 2 | 2 |
| **DPG** | 1.5 | 1.5 |

Les résultats des propriétés de caoutchouterie mesurées avant et après cuisson sont consignés dans le tableau 4.

TABLEAU 4

| N° Composition | 3 | 4 |
|---|---|---|
| **Propriétés avant cuisson** | | |
| Mooney | 75 | 88 |
| T5 (min) | > 30 | > 30 |
| Temps de cuisson à 150°C en minutes | 60 | 40 |
| **Propriétés après cuisson** | | |
| M100 | 0.68 | 1.5 |
| M300 | 2.47 | 6.75 |
| PH | 41.7 | 24.6 |
| AR | 1040 | 580 |
| FR | 16.8 | 19.6 |
| **Propriétés dynamiques** | | |
| Tg $\delta$ | 0.324 | 0.257 |

Les résultats montrent que la composition 3 ne comprenant pas de mercaptosilane a un faible niveau de renforcement. Au contraire, les résultats obtenus avec la composition 4 permettent de montrer que l'utilisation de l'invention donne un niveau de renforcement plus élevé et satisfaisant et des niveaux d'hystérèse plus faibles, sans pénaliser significativement les propriétés avant cuisson et par voie de conséquence la mise en oeuvre.

Exemple 3 :

Le but de cet exemple est de montrer l'intérêt de l'invention par rapport à l'utilisation, connue dans l'art, d'une association comprenant un agent de liaison de type mercaptosilane et un alkylsilane.

On réalise 2 compositions identiques à celles de l'exemple 1 à l'exception des taux en additif de recouvrement et de soufre et pour la composition témoin 5 l'addition d'un alkysilane.

TABLEAU 5

| N° Composition | 5 | 6 |
|---|---|---|
| SBR | 96 | 96 |
| PB | 30 | 30 |
| Silice | 80 | 80 |
| ZnO | 2.5 | 2.5 |
| Acide stéarique | 2 | 2 |
| Anti-Oxydant | 1.9 | 1.9 |
| Huile aromatique | 6 | 6 |
| PMHS (9) | | 4 |
| Dynasylan 3201 | 1.1 | 1.1 |
| Si 216 (*) | 4 | |
| Soufre | 2.4 | 2.4 |
| CBS | 2 | 2 |
| DPG | 1.5 | 1.5 |

(9) PMHS fonctionnalisé correspondant à la formule (V-3)
(*) Si 216 : agent de recouvrement de formule brute $C_{16}H_{33}Si(OEt)_3$ commercialisé par la société DEGUSSA

Les résultats sont consignés dans le tableau 6.

TABLEAU 6

| N° Composition | 5 | 6 |
|---|---|---|
| **Propriétés avant cuisson** | | |
| Mooney | 80 | 78 |
| T5 (min) | 15 | 23 |
| Temps de cuisson à 150°C en minutes | 40 | 40 |
| **Propriétés après cuisson** | | |
| M100 | 1.69 | 2.04 |
| M300 | 5.89 | 7.52 |
| PH | 30.3 | 30.9 |
| AR | 540 | 480 |
| FR | 21.4 | 21.1 |
| **Propriétés dynamiques** | | |
| Tg $\delta$ | 0.244 | 0.254 |

La composition 6 conforme à l'invention permet d'obtenir des temps de grillage T5 supérieurs à ceux obtenus avec

la composition conforme à l'état de la technique utilisant l'association d'un mercaptosilane et d'un alkylsilane tout en facilitant la mise en oeuvre.

De plus, la composition 6 conforme à l'invention permet d'obtenir, pour des taux équivalents de produits constituants, un niveau de renforcement bien supérieur à celui de la composition témoin.

Exemple 4 :

Cet exemple a pour but de montrer que l'invention permet d'introduire dans les compositions de caoutchouterie, des quantités importantes d'organosilanes possédant une fonction ⟨⟨mercapto⟩⟩. Les compositions ainsi préparées restent faciles à mettre en oeuvre et présentent une sécurité au grillage satisfaisante.

On prépare 3 compositions, conformes à l'invention, identiques à celles de l'exemple 1 à l'exception des quantités de mercaptosilane qui varient.

TABLEAU 7

| N° Composition | 7 | 8 | 9 |
|---|---|---|---|
| SBR | 96 | 96 | 96 |
| PB | 30 | 30 | 30 |
| Silice | 80 | 80 | 80 |
| ZnO | 2.5 | 2.5 | 2.5 |
| Acide stéarique | 2 | 2 | 2 |
| Anti-Oxydant | 1.9 | 1.9 | 1.9 |
| Huile aromatique | 6 | 6 | 6 |
| PMHS | 4.5 | 4.5 | 4.5 |
| Dynasylan 3201 | 1 | 1.5 | 2 |
| Soufre | 1.1 | 1.1 | 1.1 |
| CBS | 2 | 2 | 2 |
| DPG | 1.5 | 1.5 | 1.5 |

Les résultats des propriétés de caoutchouterie mesurées avant et après cuisson sont consignés dans le tableau 8.

TABLEAU 8

| N° Composition | 7 | 8 | 9 |
|---|---|---|---|
| **Propriétés avant cuisson** | | | |
| Mooney | 87 | 88 | 91 |
| T5 (min) | > 30 | > 30 | > 30 |
| Temps de cuisson à 150°C en minutes | 40 | 40 | 40 |
| **Propriétés après cuisson** | | | |
| M100 | 1.51 | 1.49 | 1.54 |
| M300 | 6.34 | 6.75 | 7.32 |
| PH | 25.9 | 24.6 | 23.2 |
| AR | 620 | 590 | 510 |
| FR | 19.8 | 19.3 | 17.7 |
| **Propriétés dynamiques** | | | |
| G | $1.58 \times 10^6$ | $1.58 \times 10^6$ | $1.52 \times 10^6$ |
| Tg $\delta$ | 0.263 | 0.255 | 0.24 |

Les résultats montrent que l'invention permet d'augmenter le taux de mercaptosilane sans entraîner de pénalisation en terme de sécurité au grillage qui reste satisfaisante et de mise en oeuvre des compositions.

Par conséquent, l'invention permet de préparer des compositions de caoutchouterie avec des forts taux d'agent de liaison de la famille des mercaptosilanes contrairement à ce qui était possible selon l'état de la technique antérieur.

Exemple 5

Cet exemple a pour but de monter l'intérêt de l'invention par rapport à l'utilisation du Si 69 (tétrasulfure de bis(3-triéthoxysilylpropyle) commercialisé par la société DEGUSSA qui est considéré comme le produit apportant le meilleur compromis pour des compositions comprenant de la silice à titre de charge renforçante en terme de sécurité au grillage, facilité de mise en oeuvre et de pouvoir renforçant.

On prépare 2 compositions identiques à celles de l'exemple 1 à l'exception pour la composition témoin 10 de l'utilisation exclusive de Si 69 comme additif de renforcement et pour la composition 11 conforme à l'invention du taux de Dynasylan 3201.

TABLEAU 9

| N° Composition | 10 | 11 |
|---|---|---|
| SBR | 96 | 96 |
| PB | 30 | 30 |
| Silice | 80 | 80 |
| ZnO | 2.5 | 2.5 |
| Acide stéarique | 2 | 2 |
| Anti-Oxydant | 1.9 | 1.9 |
| Huile aromatique | 6 | 6 |
| PMHS | | 4.5 |
| Dynasylan 3201 | | 1.5 |
| Si 69 | 6.4 | |
| Soufre | 1.1 | 1.1 |
| CBS | 2 | 2 |
| DPG | 1.5 | 1.5 |

Les résultats des propriétés de caoutchouterie mesurées avant et après cuisson sont consignés dans le tableau 10.

TABLEAU 10

| N° Composition | 10 | 11 |
|---|---|---|
| **Propriétés avant cuisson** | | |
| Mooney | 82 | 88 |
| T5 (min) | 25 | > 30 |
| Temps de cuisson à 150°C en minutes | 40 | 40 |
| **Propriétés après cuisson** | | |
| M100 | 1.56 | 1.49 |
| M300 | 6.97 | 6.75 |
| PH | 26.4 | 24.6 |
| AR | 560 | 590 |
| FR | 19.5 | 19.3 |
| **Propriétés dynamiques** | | |
| Tg$\delta$ | 0.299 | 0.255 |

On constate que l'invention permet d'améliorer la sécurité au grillage et de diminuer l'hystérèse sans pénaliser substantiellement les autres propriétés.

Exemple 6

Cet exemple a pour but de monter que l'effet bénéfique de l'invention est également obtenu avec des compositions de caoutchouc à base de caoutchouc naturel renforcées avec de la silice. On prépare 3 compositions selon les formulations indiquées dans le tableau 11.

TABLEAU 11

| N° composition | 12 | 13 | 14 |
|---|---|---|---|
| **Caoutchouc naturel** | 100 | 100 | 100 |
| **Silice (3)** | 50 | 50 | 50 |
| **ZnO** | 5 | 5 | 5 |
| **Acide stéarique** | 2 | 2 | 2 |
| **Anti-Oxydant (4)** | 1.9 | 1.9 | 1.9 |
| **PMHS (5)** | | 2.5 | |
| **PMHS (9)** | | | 2.5 |
| **A 189 ((10)** | 3 | 1.5 | 1.5 |
| **Soufre** | 1.3 | 1.3 | 1.3 |
| **CBS (7)** | **2** | 2 | 2 |
| **DPG (8)** | **1.1** | 1.1 | 1.1 |

Les produits (3) (4) (5) (7) (8) sont identiques à ceux de l'exemple 1. Le produit (9) est identique à celui de l'exemple 3.
(10) : γ mercapto-propyltriméthoxysilane commercialisé par la société OSI.

La composition 12 est une composition témoin contenant uniquement un composé mercaptosilane dont le rhéogramme est représenté sur la figure 2 par la courbe C3, les compositions 13 et 14 sont conformes à l'invention et leurs rhéogrammes sont représentés sur la figure 2 respectivement par les courbes C4 et C5. Les résultats des propriétés de caoutchouterie mesurées avant cuisson et après cuisson et les rhéogrammes à 150°C sont présentés respectivement au tableau 12 et à la figure 2.

TABLEAU 12

| **N° composition** | **12** | **13** | **14** |
|---|---|---|---|
| **Propriétés avant cuisson** | | | |
| **Mooney** | 102 | 54 | 53 |
| **T5 (min)** | 0 | 12.5 | 12 |
| **Caractéristiques rhéomètriques** | | | |
| **Ts (0.2) min** | 0 | 4.5 | 4.5 |
| **Tc (99) (min)** | 5 | 11 | 11 |
| **Temps de cuisson à 150°C en minutes** | | 20 | 20 |
| **Propriétés après cuisson** | | | |
| | Vulcanisation prématurée | | |
| **M100** | | 1.77 | 1.79 |
| **M300** | | 5.7 | 5.85 |
| **PH** | | 15.2 | 14.6 |

On observe au travers des mesures du temps de grillage et des caractéristiques rhéométriques une amélioration considérable de la sécurité au grillage. Par ailleurs, l'invention permet d'améliorer la mise en oeuvre et de rendre possible industriellement la réalisation de compositions avec un agent de liaison de la famille des mercaptosilanes.

Exemple 7

On réalise deux compositions identiques à celles de l'exemple 5, si ce n'est que pour la composition 16 conforme à l'invention, la quantité de PMHS (5) est plus élevée que dans la composition 11.

TABLEAU 13

| N° Composition | 15 | 16 |
|---|---|---|
| **SBR** | 96 | 96 |
| **PB** | 30 | 30 |
| **Silice** | 80 | 80 |
| **ZnO** | 2.5 | 2.5 |
| **Acide stéarique** | 2 | 2 |
| **Anti-Oxydant** | 1.9 | 1.9 |
| **Huile aromatique** | 6 | 6 |
| **PMHS** | | 6 |
| **Dynasylan 3201** | | 1.5 |
| **Si 69** | 6.4 | |
| **Soufre** | 1.1 | 1.1 |
| **CBS** | 2 | 2 |
| **DPG** | 1.5 | 1.5 |

La composition 15 est une composition de référence identique à la composition 10 de l'exemple 5, déjà connue dans l'art, et pouvant servir à la confection d'une bande de roulement d'enveloppe de pneumatique. Les résultats des propriétés de caoutchouterie mesurées avant et après cuisson sont présentés dans le tableau 14.

TABLEAU 14

| N° composition | 15 | 16 |
|---|---|---|
| **Propriétés avant cuisson** | | |
| Mooney | 82 | 86 |
| T5 (min) | 25 | >30 |
| Temps de cuisson à 150°C en minutes | 40 | 40 |
| **Propriétés après cuisson** | | |
| M100 | 1.56 | 1.59 |
| M300 | 6.97 | 7.5 |
| Hystérèse | 26.4 | 22.3 |
| AR | 560 | 530 |
| FR | 19.5 | 18.1 |
| **Propriétés dynamiques** | | |
| G | $3.67 \times 10^6$ | $1.97 \times 10^6$ |
| Tg δ | 0.299 | 0.231 |

Les résultats montrent que la composition conforme à l'invention permet d'obtenir des propriétés avant cuisson semblables à celles obtenues avec le Si 69 et qu'après cuisson, elle possède un niveau de renforcement identique à celui de la composition de référence 15, alors que les niveaux d'hystérèse et de Tg δ sont considérablement plus faibles, ce qui rend une telle composition particulièrement appropriée pour entrer dans la constitution de produits semi-finis, notamment de bandes de roulements, susceptibles de conduire à des enveloppes pneumatiques ayant une résistance au roulement réduite.

Exemple 8

Cet exemple montre l'intérêt d'une composition de caoutchouc conforme à l'invention et réticulant au soufre, pour enrober et adhérer à un renfort métallique destiné à être utilisé dans une enveloppe de pneumatique.

On réalise 3 compositions selon les formulations décrites au tableau 15. La composition 17 constitue une composition de référence ne contenant pas d'additif de renforcement élastomère/silice. La composition 18 est également une composition témoin comportant seulement le γ-mercapto-propyltriéthoxysilane. La composition 19 est conforme à l'invention.

TABLEAU 15

| N° Composition | 17 | 18 | 19 |
|---|---|---|---|
| Caoutchouc Naturel | 100 | 100 | 100 |
| Silice (12) | 50 | 50 | 50 |
| ZnO | 4 | 4 | 4 |
| Acide stéarique | 1 | 1 | 1 |
| Anti-Oxydant (4) | 2 | 2 | 2 |
| Sel de Cobalt (13) | 0.7 | 0.7 | 0.7 |
| PMHS (11) | | | 2.5 |
| Dynasylan 3201 (6) | | 1 | 1 |
| Soufre | 4.5 | 4.5 | 4.5 |
| CBS (7) | 0.8 | 0.8 | 0.8 |
| DPG (8) | 0.8 | 0.8 | 0.8 |

Les produits (4), (6)), (7) et (8) sont les mêmes que ceux de l'exemple 1
(11) : PMHS fonctionnalisé correspondant à la formule (V-4)
(12) : Silice ultrasil VN 2 commercialisée par la société DEGUSSA
(13) : Naphténate de cobalt

Les résultats des propriétés de caoutchouterie mesurées avant et après cuisson à 150°C sont présentés respectivement au tableau 16.

TABLEAU 16

| N° Composition | 17 | 18 | 19 |
|---|---|---|---|
| **Propriétés avant cuisson** | | | |
| Mooney | 94 | 82 | 74 |
| Temps de cuisson à 150°C en minutes | 35 | 35 | 35 |
| **Propriétés après cuisson** | | | |
| M100 | 1.69 | 2.22 | 2.06 |
| M300 | 4.08 | 6.36 | 5.91 |
| PH | 20.7 | 17.2 | 14.5 |
| AR | 590 | 570 | 510 |
| FR | 22.1 | 23.6 | 22.1 |

On constate que la composition conforme à l'invention possède des propriétés de mise en oeuvre à l'état non vulcanisé supérieures à celles des compositions selon l'art antérieur. En d'autres termes, l'utilisation de l'additif de renforcement selon l'invention permet d'améliorer la viscosité Mooney.

On constate également que la composition conforme à l'invention possède une hystérèse nettement améliorée sans entraîner de pénalisation des propriétés de renforcement et des propriétés mécaniques de la composition.

Exemple 9 :

Le but de cet exemple est de montrer qu'un additif de renforcement comprenant des polyorganosiloxanes fonctionnalisés ⟨⟨en bout de chaîne⟩⟩ est également utilisable dans le cadre de l'invention. On réalise 3 compositions selon les formulations décrites au tableau 17.

Les compositions 15 et 20 sont des compositions témoin conformes à l'état de la technique utilisant uniquement un agent de liaison. Leurs rhéogrammes sont représentés sur la figure 3 respectivement par les courbes C6 et C7. La composition 21 est conforme à l'invention et le rhéogramme est représenté sur la figure 3 par la courbe C8.

TABLEAU 17

| N° Composition | 15 | 20 | 21 |
|---|---|---|---|
| SBR (1) | 96 | 96 | 96 |
| PB (2) | 30 | 30 | 30 |
| Silice (3) | 80 | 80 | 80 |
| ZnO | 2.5 | 2.5 | 2.5 |
| Acide stéarique | 2 | 2 | 2 |
| Anti-Oxydant (4) | 1.9 | 1.9 | 1.9 |
| Huile aromatique | 6 | 6 | 6 |
| PS 340 (14) | | | 4.5 |
| Dynasylan 3201 (6) | | 1.8 | 1.8 |
| Si 69 | 6.4 | | |
| Soufre | 1.1 | 1.1 | 1.1 |
| CBS (7) | 2 | 2 | 2 |
| DPG (8) | 1.5 | 1.5 | 1.5 |

Les produits (1), (2), (3), (4), (6), (7), (8) et Si 69 sont les mêmes que ceux de l'exemple 1.
(14): Polydiméthylsiloxane fonctionnalisé OH en bouts de chaînes PS340 commercialisé par ABCR.

Les résultats des propriétés de caoutchouterie mesurées avant et apès cuisson à 150° C, ainsi que les rhéogrammes effectués à 150° C, sont présentés respectivement au tableau 18 et sur la figure 3.

TABLEAU 18

| N° Composition | 15 | 20 | 21 |
|---|---|---|---|
| **Propriétés avant cuisson** | | | |
| **Mooney** | 82 | 105 | 90 |
| **Caractéristiques rhéomètriques** | | | |
| **Ts (0.2)** | 5 | 0 | 8 |
| **Tc (99)** | 34 | 27 | 30 |
| **Temps de cuisson à 150°C en minutes** | 40 | 40 | 40 |
| **Propriétés après cuisson** | | | |
| **M100** | 1.56 | 1.68 | 2.44 |
| **M300** | 6.97 | 4.38 | 10.92 |
| **PH** | 26.4 | 35 | 19.8 |

Nous observons au travers des résultats de viscosité Mooney que l'invention permet de faciliter la mise en oeuvre des compositions de caoutchouc comportant un taux important d'agent de renforcement du type mercaptosilane.

On observe également que la composition conforme à l'invention permet d'obtenir des rigidités (M100 et M 300) nettement supérieures à celles des compositions de référence et que les propriétés hystérétiques sont nettement améliorées par rapport à celles mesurées pour les compositions témoins 15 et 20.

Par ailleurs, les caractéristiques rhéomètriques, ainsi que les courbes de la figure 3, indiquent que l'invention permet d'utiliser un mercaptosilane, car elle engendre une augmentation importante de la sécurité au grillage de la composition.

Exemple 10 :

Le but de cet exemple est de montrer que les compositions de caoutchouc conformes à l'invention renforcées à la fois par de la silice et du noir de carbone possèdent une mise en oeuvre améliorée.

On réalise 2 compositions selon les formulations décrites au tableau 19. La composition 22 est une composition témoin tandis que la composition 23 est conforme à l'invention.

TABLEAU 19

| N° Composition | 22 | 23 |
|---|---|---|
| SBR (15) | 137.5 | 137.5 |
| Silice (3) | 40 | 40 |
| Noir N 234 | 15 | 15 |
| ZnO | 3 | 3 |
| Acide stéarique | 2 | 2 |
| Anti-Oxydant (4) | 1.5 | 1.5 |
| PMHS (11) | | 2.5 |
| Dynasylan 3201 (6) | 1 | 1 |
| Soufre | 1.4 | 1.4 |
| CBS (7) | 1.4 | 1.4 |

Les produits (3), (4), (6) et (7) sont les mêmes que ceux de l'exemple 1.
Le produit (11) est celui utilisé dans l'exemple 8.
(15) : SBR émulsion (Cariflex 1712) ayant 16% de liaisons 1-2, 72% de liaisons trans, 23.5% de styrène incorporé, étendu avec 37.5% d'huile, et commercialisé par Shell.

Les résultats des propriétés de caoutchouterie mesurées à cru sont présentés dans le tableau 20.

TABLEAU 20

| N° Composition | 22 | 23 |
|---|---|---|
| Propriétés avant cuisson | | |
| Mooney | 114 | 97 |
| T5 (min) | >30 | >30 |

On constate que la composition conforme à l'invention possède toujours une viscosité Mooney plus faible que celle de la composition témoin lorsque la charge renforçante de la composition est un coupage de noir de carbone et de silice.

Exemple 11 :

Cet exemple a pour but de montrer que les compositions conformes à l'invention possèdent des propriétés améliorées avec un taux réduit de Si 69 lorsqu'il est utilisé en association avec un polyorganosiloxane fonctionnalisé.
On réalise 2 compositions selon les formulations décrites au tableau 21.La composition 24 est une composition témoin conforme à l'état de la technique. La composition 25 est conforme à l'invention.

TABLEAU 21

| N° Composition | 24 | 25 |
|---|---|---|
| **SBR (1)** | 96 | 96 |
| **PB (2)** | 30 | 30 |
| **Silice (3)** | 80 | 80 |
| **ZnO** | 2.5 | 2.5 |
| **Acide stéarique** | 2 | 2 |
| **Anti-Oxydant (4)** | 1.9 | 1.9 |
| **Huile aromatique** | 6 | 6 |
| **PMHS (11)** | | 4.5 |
| **Si 69** | 2 | 2 |
| **Soufre** | 1.1 | 1.1 |
| **CBS (7)** | 2 | 2 |
| **DPG (8)** | 1.5 | 1.5 |

Les produits (1), (2), (3), (4), (7), (8), sont les mêmes que ceux utilisés dans l'exemple 1et le produit (11) est celui utilisé dans l'exemple 8.

Les résultats des propriétés de caoutchouterie mesurées avant cuisson, ainsi que les caractéristiques rhéométriques obtenues à 150°C sont présentés au tableau 22.

La figure 4 regroupe les rhéogrammes des compositions 24 et 25, respectivement représentés par la courbe C9 et la courbe C10.

TABLEAU 22

| N° Composition | 24 | 25 |
|---|---|---|
| **Propriétés avant cuisson** | | |
| **Mooney** | 113 | 65 |
| **T5 (min)** | 6 | >30 |
| **Caractéristiques rhéométriques (150°C)** | | |
| **Ts (0.2) (min)** | 0 | 15 |
| **Tc (99) (min)** | *indéterminé* | 35 |

Les résultats montrent que l'invention permet d'obtenir des compositions de caoutchouterie fortement chargées à la silice possédant une excellente aptitude à la mise en oeuvre avec cependant un taux réduit de Si 69, ce qui permet de réaliser des économies sur les coûts de production de compositions comprenant de la silice à titre de charge renforçante sans entraîner de pénalisation au niveau du compromis en terme de sécurité au grillage.

Exemple 12 :

Cet exemple a pour but de montrer que les compositions conformes à l'invention possèdent des propriétés équivalentes à celles obtenues lorsque l'on utilise le Si 69 avec cependant un taux global en additif de renforcement nettement diminué.

On réalise deux compositions selon les formulations décrites au tableau 23. La composition 15 déjà décrite à l'exemple 7 est conforme à l'état de la technique, la composition 27 est conforme à l'invention.

TABLEAU 23

| N° Composition | 15 | 27 |
|---|---|---|
| SBR (1) | 96 | 96 |
| PB (2) | 30 | 30 |
| Silice (3) | 80 | 80 |
| ZnO | 2.5 | 2.5 |
| Acide stéarique | 2 | 2 |
| Anti-Oxydant (4) | 1.9 | 1.9 |
| Huile aromatique | 6 | 6 |
| PS 340 (14) | | 2.5 |
| Dynasylan 3201 (6) | | 1.1 |
| Si 69 | 6.4 | |
| Soufre | 1.1 | 1.1 |
| CBS (7) | 2 | 2 |
| DPG (8) | 1.5 | 1.5 |

Les produits (1), (2), (3), (4), (6), (7), (8) et (14) sont les mêmes que ceux des exemples précédents.

Les résultats des propriétés de caoutchouterie mesurées avant et après cuisson à 150 °C sont présentés au tableau 24.

TABLEAU 24

| N° Composition | 15 | 27 |
|---|---|---|
| **Propriétés avant cuisson** | | |
| Mooney | 82 | 90 |
| T5 (min) | 25 | >30 |
| Temps de cuisson à 150°C en minutes | 40 | 40 |
| **Propriétés après cuisson** | | |
| M100 | 1.56 | 1.62 |
| M300 | 6.97 | 6.75 |
| PH | 26.4 | 26.2 |
| AR | 560 | 600 |
| FR | 19.5 | 21.8 |

Les résultats montrent que la composition conforme à l'invention permet d'obtenir des propriétés avant cuisson proches de celles obtenues avec le Si 69, et qu'après cuisson elle possède un niveau de renforcement identique à celui de la composition témoin n°15, avec cependant un taux global en additif de renforcement nettement inférieur (3.6 pce contre 6.4 pce), ce qui permet de réaliser des économies sur les coûts de composition, sans entraîner une pénalisation du compromis des propriétés.

**Revendications**

1. Composition de caoutchouc destinée à la fabrication d'enveloppes de pneumatiques ayant des propriétés hystérétiques améliorées, à base d'au moins un élastomère et de silice à titre de charge renforçante, caractérisée en ce qu'elle renferme un additif de renforcement constitué par le mélange et/ou le produit de réaction ⟨⟨in situ⟩⟩ d'au moins un composé polyorganosiloxane fonctionnalisé, comprenant par molécule, au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes de polymère(s).

2. Composition selon la revendication 1, caractérisée en ce que le composé polyorganosiloxane fonctionnalisé est choisi parmi les composés suivants :

(A) - les composés comprenant, par molécule,

- α - d'une part, au moins un motif siloxyle fonctionnel de formule:

$$\textbf{(I)} \qquad (R)_a\,Y\,Si\,(O)_{\frac{3-a}{2}}$$

dans laquelle :

a = 0,1 ou 2,

R est un radical hydrocarboné monovalent choisi parmi les alkyles linéaires ou ramifiés, ayant de 1 à 6 atomes de carbone en particulier le méthyle, l'éthyle, le propyle, le butyle, et/ou parmi les aryles et en particulier le phényle, le méthyle étant plus particulièrement préféré, les radicaux R étant identiques ou différents quand a = 2,

Y est un radical alcoxyle linéaire ou ramifié choisi, de préférence, parmi les alcoxyles en $C_1$ - $C_{15}$ , et en particulier $C_1$ - $C_6$ , le méthoxyle, l'éthoxyle et le (iso)propoxyle étant plus particulièrement retenus.

- β - et éventuellement d'autre part, au moins un motif siloxyle fonctionnel de formule:

$$\textbf{(II)} \qquad (R)_b\,W\,Si\,(O)_{\frac{3-b}{2}}$$

dans laquelle :

b= 0,1 ou 2,

R répond à la même définition que celle donnée supra pour le substituant R du motif (I) et peut être identique ou différent de ce dernier,

W est un radical hydrocarboné monovalent ayant de 2 à 30 atomes de carbone et éventuellement des atomes de S et/ou O et constituant un reste fonctionnel, relié au silicium par une liaison Si-C, ce reste étant choisi parmi les groupes suivants :

(i) un groupe alkyle, linéaire ou ramifié, comprenant au moins 7 atomes de carbone,
(2i) un groupe alkényle en $C_2$ - $C_{20}$, linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en α,

(3i) un groupe mono ou polycyclique aliphatique saturé ou insaturé comportant 5 à 20 atomes de carbone et une ou plusieurs double(s) liaison(s) éthyléniques dans le ou les cycles, éventuellement relié au silicium par l'intermédiaire d'un radical alkylène, linéaire ou ramifié, en $C_2$- $C_{10}$.

- γ - et éventuellement au moins un motif siloxyle (III) de formule suivante:

$$\textbf{(III)} \qquad (R)_c\ (H)_d\ Si\ (O)_{\frac{4-(c+d)}{2}}$$

dans laquelle : c = 0, 1, 2 ou 3, d = 1et c + d ≤ 3

les substituants R étant tels que définis ci-dessus dans les motifs (I) et (II)

(B) - les composés de formule (IV):

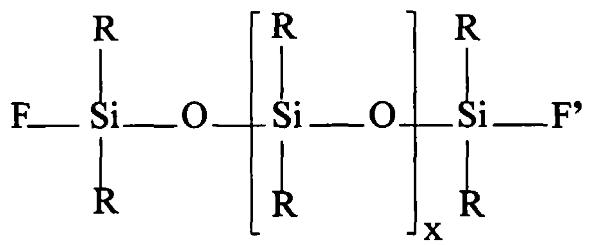

**(IV)**

dans laquelle :

R est un radical hydrocarboné répondant à la même définition que celle de R donnée supra en légende de la formule (I), ou un groupe alkényle en $C_2$-$C_{20}$ linéaire ou ramifié comportant une ou plusieurs doubles liaisons; les différents exemplaires de R peuvent être identiques ou différents entre eux,

x = 0 à 500 de préférence x = 0 à 50,

F et F' sont des radicaux monovalents choisis parmi l'hydrogène, les halogènes et préférentiellement le chlore, ceux répondant à la définition de R, et/ou des fonctions hydroxyles, alkoxy, énoxy, acyloxy, plus particulièrement acétoxy, oxime, amine, les fonctions hydroxyles, méthoxy et éthoxy étant plus particulièrement préférées. F et F' peuvent être différents ou identiques, mais dans ce dernier cas il ne peut s'agir du radical R.

( C) - les résines polyorganosiloxanes comportant des radicaux monovalents et/ou des fonctions réactives F et F', ces symboles ayant la même définition que celle donnée supra en légende de la formule (IV).

**3.** Composition selon la revendication 2, caractérisée en ce que le substituant W du motif (II) est choisi parmi les radicaux suivants:

- un radical (i) comprenant de 10 à 30 atomes de carbone et choisi de préférence parmi les radicaux alkyles suivants: dodécyle, undécyle, tridécyle.
- un radical (2i) en $C_6$ - $C_{10}$, comportant une double liaison, et de préférence une autre conjuguée ou non à la première, ledit radical étant avantageusement l'héxényle ou le dodécènyle;
- un groupe (3i) monocyclique ou polycyclique aliphatique saturé ou insaturé comportant 5 à 20 atomes de carbone, plus particulièrement le cyclohexyle, le cyclohexényle ou des bicycles issus du norbonène ou du dicyclopentadiène, éventuellement relié au silicium par l'intermédiaire d'un radical alkylène linéaire ou ramifié, en $C_2$-$C_6$.

**4.** Composition selon la revendication 2 ou 3, caractérisée en ce que le polyorganosiloxane est formé par un copolymère linéaire, statistique, séquencé ou à blocs, de formule moyenne suivante:

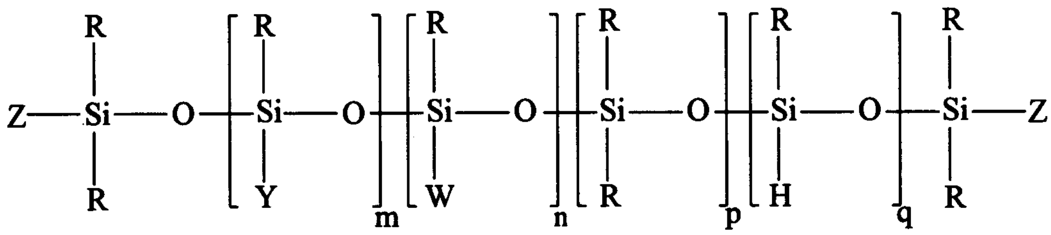

(V)

dans laquelle :

les symboles Y, W et R sont tels que définis dans les revendications 2 et 3,

le symbole Z est un radical monovalent choisi parmi les radicaux formés par l'hydrogène et parmi ceux répondant aux définitions de R, Y et W,

la somme $m + n + p + q \geq 3$ , de préférence comprise entre 3 et 100 ; le cas de figure dans lequel $p = q = 0$ , $m \leq 1$ et $n \leq 50$ étant plus particulièrement préféré,

$0 \leq m \leq 100$, de préférence $1 \leq m \leq 50$
$0 \leq n \leq 100$, de préférence $1 \leq n \leq 50$
$0 \leq p \leq 20$, de préférence $0 \leq p \leq 10$
$0 \leq q \leq 40$, de préférence $0 \leq q \leq 10$
avec les conditions selon lesquelles :

. si $m = 0$, au moins l'un des substituants Z correspond à un radical répondant à la définition caractérisant Y,
. si $m = n = 0$ et $p + q \geq 1$ , alors l'un au moins des substituants Z correspond à un radical répondant à la définition caractérisant Y.

**5.** Composition selon la revendication 4, caractérisée en ce que $p = q = 0$ et $0.5 \leq m/n \leq 5$ , de préférence $1 \leq m/n \leq 3$ dans la formule (V).

**6.** Composition selon la revendication 2 ou 3 caractérisée en ce que le polyorganosiloxane est constitué par un copolymère cyclique de formule moyenne suivante :

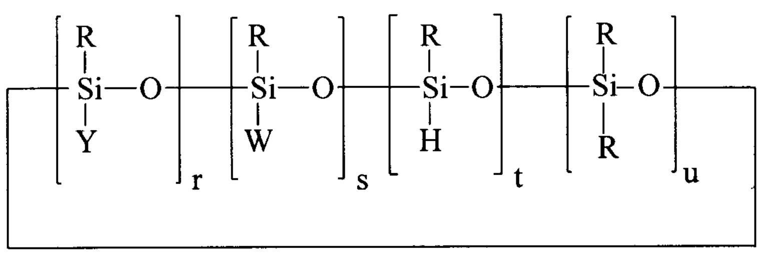

(VI)

dans laquelle :

Y, W et R sont tels que définis dans les revendications 2 et 3, et avec r, s, t et u représentant des nombres entiers ou décimaux positifs,

la somme $r + s + t + u \geq 3$ , de préférence comprise entre 3 et 8, le cas de figure dans lequel $t = u = 0$ étant plus particulièrement préféré,

$1 \leq r \leq 8$, de préférence $1 \leq r \leq 4$
$1 \leq s \leq 8$, de préférence $1 \leq s \leq 4$
$0 \leq t \leq 8$, de préférence $0 \leq t \leq 4$
$0 \leq u \leq 8$, de préférence $0 \leq u \leq 4$

**7.** Composition selon la revendication 1, caractérisée en ce que l'organosilane fonctionnalisé est choisi parmi les

composés répondant aux formules suivantes :

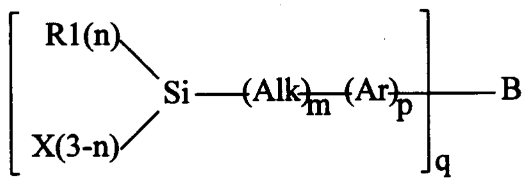 **(X)**

dans laquelle :

R1 représente un groupe alkyle contenant 1 à 10 atome(s) de carbone, ou encore le radical phényle,

X représente un groupe hydrolysable choisi parmi:

- les halogènes, de préférence le chlore et le brome
- les radicaux alkoxy ou cycloalkoxy,
- les radicaux acyloxy,

après hydrolyse, X peut éventuellement représenter un groupe hydroxyle (OH).

$0 \leq n \leq 2$

(Alk) représente un groupe hydrocarboné, divalent, choisi parmi les alkyles linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone, et de préférence 6 à 8,

p représente 0 ou 1, avec la condition que p et m ne soient pas égaux à 0 simultanément,

q = 1 ou 2,

B représente un groupe capable de former une liaison avec au moins un des élastomères de la composition de caoutchouc, et particulièrement:

- si q=2 : un groupe fonctionnel polysulfuré choisi parmi les groupes suivants:
  $—S_x—$ avec $1 \leq x \leq 8$, x étant un nombre entier positif

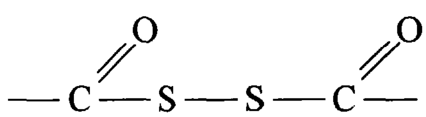

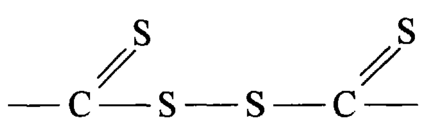

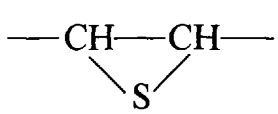

- si q=1 : un groupe fonctionnel choisi parmi les groupes suivants: —SH

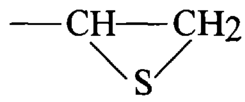

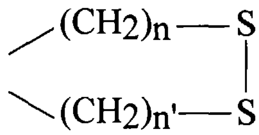

avec 1 ≤ n, n'≤ 6 et n pouvant être égal à n'

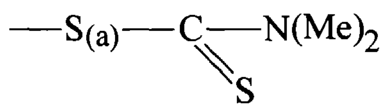

avec 1 ≤ a ≤8

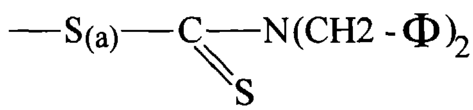

avec 1 ≤ a ≤ 8

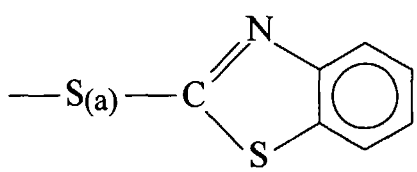

avec 1 ≤ a ≤ 8 —S—Z avec Z étant un reste halogène et de préférence chlorure ou bromure ou une fonction azotée de préférence amine ou amide.

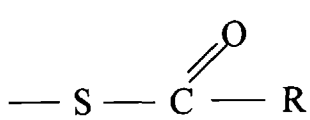

R : alkyle ou alkényle, cycliques ou acycliques, et aryle.

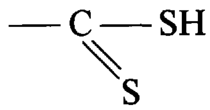

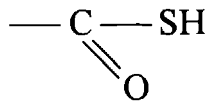

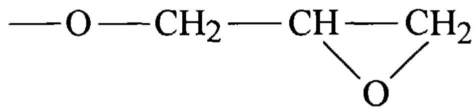

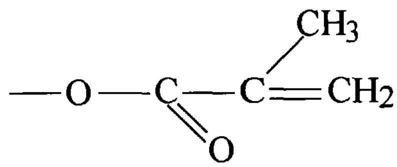

—$NH_2$
—$N_3$
les groupes mercapto pour q=1 et polysulfure ($S_x$) et disulfure ($S_2$) pour q=2 étant préférés.

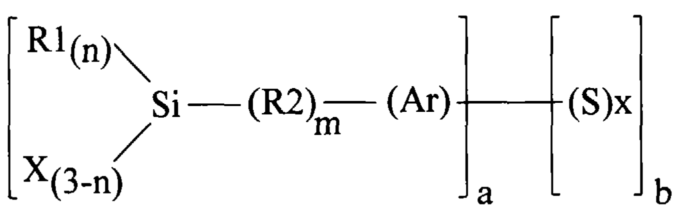

**(XI)**

dans laquelle :

R1 et X répondent à la même définition que celle donnée supra en légende de la formule (X),
$0 \leq n \leq 2$,

(R2) représente un groupe hydrocarboné, divalent, choisi parmi les alkyles et alkylenoxy linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone,

(S)x est un radical polysulfuré divalent, chaque valence libre étant directement liée à un atome de carbone d'un cycle aromatique, plusieurs cycles aromatiques pouvant être reliés entre eux par le radical (S)x,
$2 \leq x \leq 6$,
a≥ 2 et b ≥ 1 avec 04 ≤ a/b ≤ 2

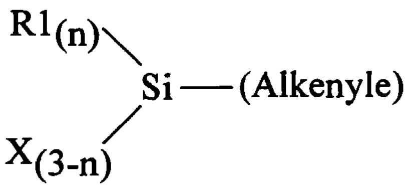

(XII)

dans laquelle :

R1 et X répondent à la même définition que celle donnée supra en légende de la formule (X),
$0 \leq n \leq 2$,

Alkenyle représente un groupe hydrocarboné, linéaire ou ramifié, cyclique ou non, comportant une ou plusieurs doubles liaisons, ayant de 2 à 20 atomes de carbone et de préférence de 2 à 6.

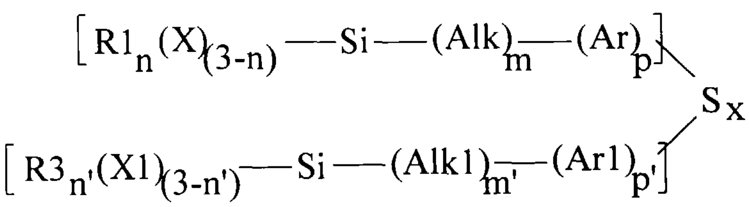

(XIII)

dans laquelle :

les symboles R1, R3, X, X1, Alk, Alk1, n, n', m, m', Ar, Ar1, p et p' sont identiques ou différents et répondent à la même définition que celle donnée supra en légende de la formule (X),

le symbole x est un nombre entier positif entre 1 et 8,

avec la condition de ne pas avoir simultanément n = n' ; m = m ' ; p = p' ; X = X1 ; R1 = R3 ; Alk = Alk1 et Ar = Ar1.

**8.** Composition selon la revendication 7, caractérisée en ce que le composé organosilane est un mercaptosilane et préférentiellement un 3-mercapto-propyl tri(alkoxy en C1-C6) silane et plus préférentiellement le 3-mercaptopropyltriméthoxyon triéthoxysilane.

**9.** Composition selon la revendication 7, caractérisée en ce que le composé organosilane est un bis(trialkoxyle C1-C4silylpropyl)-tétrasulfure et plus préférentiellement le bis(triéthoxysilylpropyl)-tétrasulfure.

**10.** Composition selon l'une quelconque des revendications 1 à 9, caractérisée en ce que la silice est une silice de précipitation hautement dispersible présentant une surface BET ≤ à 450 $m^2/g$, une surface spécifique CTAB ≤ 450 $m^2/g$.

**11.** Composition selon la revendication 10, caractérisée en ce que la silice possède un rapport surface spécifique BET/surface spécifique CTAB ≥ 1 et ≤ 1.2.

**12.** Composition selon l'une quelconque des revendications 1 à 11, caractérisée en ce qu'elle comporte en outre du noir de carbone.

**13.** Composition selon la revendication 12, caractérisée en ce que la quantité de noir de carbone est ≤ 200 % par rapport à la quantité de silice présente.

**14.** Composition selon l'une quelconque des revendications 1 à 13, caractérisée en ce que le polymère diénique est

un copolymère de butadiène-styrène ou un copolymère de butadiène-styrène-isoprène ou un polybutadiène ou du polyisoprène ou du caoutchouc naturel ou un coupage de 2 ou plus de ces polymères diéniques.

**15.** Composition selon la revendication 14, caractérisée en ce que le copolymère de butadiène-styrène est un copolymère préparé en solution ayant une teneur en styrène comprise entre 25 et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20°C et - 80°C.

**16.** Composition selon la revendication 14, caractérisée en ce que le polybutadiène possède plus de 90 % de liaisons cis-1,4.

**17.** Procédé pour retarder le grillage et/ou améliorer les propriétés hystérétiques de compositions de caoutchouc comprenant de la silice à titre de charge renforçante, un système réticulant, un additif de renforcement et destinées à la fabrication d'enveloppes de pneumatiques, caractérisé en ce qu'il consiste à utiliser dans la composition l'additif de renforcement constitué par le mélange et/ou le produit de réaction ⟨⟨in situ⟩⟩ d'au moins un composé polyorganosiloxane fonctionnalisé comprenant par molécule au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes de polymère(s).

**18.** Procédé selon la revendication 17, caractérisé en ce que le composé polyorganosiloxane fonctionnalisé est choisi parmi les composés suivants :

(A) - les composés comprenant, par molécule,

- α - d'une part, au moins un motif siloxyle fonctionnel de formule:

$$\textbf{(I)} \qquad (R)_a\,Y\,Si\,(O)_{\frac{3-a}{2}}$$

dans laquelle :

a = 0,1 ou 2,

R est un radical hydrocarboné monovalent choisi parmi les alkyles linéaires ou ramifiés, ayant de 1 à 6 atomes de carbone en particulier le méthyle, l'éthyle, le propyle, le butyle, et/ou parmi les aryles et en particulier le phényle, le méthyle étant plus particulièrement préféré, les radicaux R étant identiques ou différents quand a = 2,

Y est un radical alcoxyle linéaire ou ramifié choisi, de préférence, parmi les alcoxyles en $C_1$ - $C_{15}$, et en particulier $C_1$ - $C_6$, le méthoxyle, l'éthoxyle et le (iso)propoxyle étant plus particulièrement retenus.

- β - et éventuellement d'autre part, au moins un motif siloxyle fonctionnel de formule:

$$\textbf{(II)} \qquad (R)_b\,W\,Si\,(O)_{\frac{3-b}{2}}$$

dans laquelle :

b = 0,1 ou 2,

R répond à la même définition que celle donnée supra pour le substituant R du motif (I) et peut être identique ou différent de ce dernier,

W est un radical hydrocarboné monovalent ayant de 2 à 30 atomes de carbone et éventuellement des atomes de S et/ou O et constituant un reste fonctionnel, relié au silicium par une liaison Si-C, ce reste étant choisi parmi les groupes suivants :

(i) un groupe alkyle, linéaire ou ramifié, comprenant au moins 7 atomes de carbone,
(2i) un groupe alkényle en $C_2$ - $C_{20}$, linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en $\alpha$,
(3i) un groupe mono ou polycyclique aliphatique saturé ou insaturé comportant 5 à 20 atomes de carbone et une ou plusieurs double(s) liaison(s) éthyléniques dans le ou les cycles, éventuellement relié au silicium par l'intermédiaire d'un radical alkylène, linéaire ou ramifié, en $C_2$ - $C_{10}$.

- $\gamma$ - et éventuellement au moins un motif siloxyle (III) de formule suivante:

$$\textbf{(III)} \qquad (R)_c\ (H)_d\ Si\ (O)_{\frac{4-(c+d)}{2}}$$

dans laquelle :

c = 0, 1, 2 ou 3, d = 1 et c + d $\leq$ 3
les substituants R étant tels que définis ci-dessus dans les motifs (I) et (II)

(B) - les composés de formule (IV):

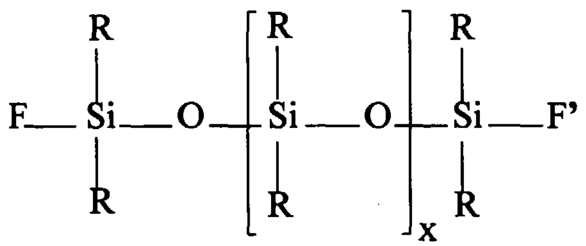

**(IV)**

dans laquelle :

R est un radical hydrocarboné répondant à la même définition que celle de R donnée supra en légende de la formule (I), ou un groupe alkényle en $C_2$-$C_{20}$ linéaire ou ramifié comportant une ou plusieurs doubles liaisons; les différents exemplaires de R peuvent être identiques ou différents entre eux,

x = 0 à 500, de préférence x = 0 à 50

F et F' sont des radicaux monovalents choisis parmi l'hydrogène, les halogènes et préférentiellement le chlore, ceux répondant à la définition de R, et/ou des fonctions hydroxyles, alkoxy, énoxy, acyloxy, plus particulièrement acétoxy, oxime, amine, les fonctions hydroxyles, méthoxy et éthoxy étant plus particulièrement préférées. F et F' peuvent être différents ou identiques, mais dans ce dernier cas il ne peut s'agir du radical R.

( C) - les résines polyorganosiloxanes comportant des radicaux monovalents et/ou des fonctions réactives F et F', ces symboles ayant la même définition que celle donnée supra en légende de la formule (IV), l'organosilane étant choisi parmi les composés répondant aux formules suivantes :

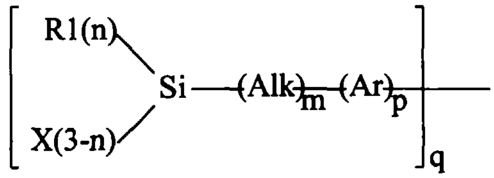 (X)

dans laquelle :

R1 représente un groupe alkyle contenant 1 à 10 atome(s) de carbone, ou encore le radical phényle,

X représente un groupe hydrolysable choisi parmi:

- les halogènes, de préférence le chlore et le brome
- les radicaux alkoxy ou cycloalkoxy,
- les radicaux acyloxy,

après hydrolyse, X peut éventuellement représenter un groupe hydroxyle (OH).
$0 \leq n \leq 2$

(Alk) représente un groupe hydrocarboné, divalent, choisi parmi les alkyles linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone, et de préférence 6 à 8,

p représente 0 ou 1, avec la condition que p et m ne soient pas égaux à 0 simultanément,

q = 1 ou 2,

B représente un groupe capable de former une liaison avec au moins un des élastomères de la composition de caoutchouc et particulièrement:

- si q=2 : un groupe fonctionnel polysulfuré choisi parmi les groupes suivants:
  —Sx— avec $1 \leq x \leq 8$, x étant un nombre entier positif

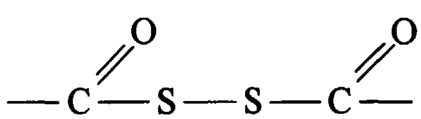

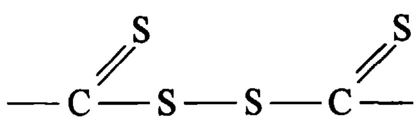

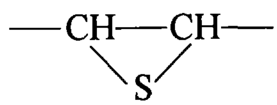

- si q=1 : un groupe fonctionnel choisi parmi les groupes suivants:
—SH

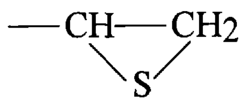

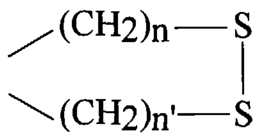

avec 1 ≤ n, n'≤ 6 et n pouvant être égal à n'

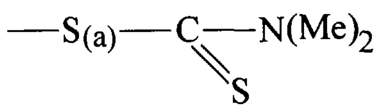

avec 1 ≤ a ≤8

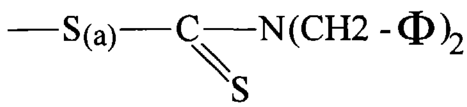

avec 1 ≤ a ≤ 8

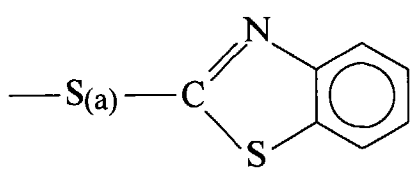

avec 1 ≤ a ≤ 8
—S—Z avec Z étant un reste halogène et de préférence chlorure ou bromure ou une fonction azotée de préférence amine ou amide.

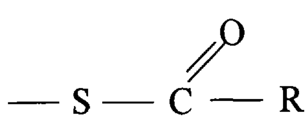

R : alkyle ou alkényle, cycliques ou acycliques, et aryle.

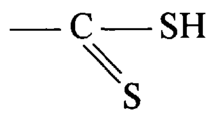

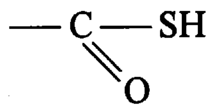

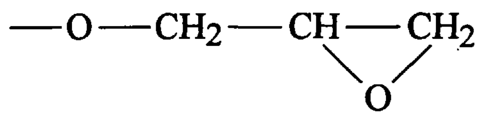

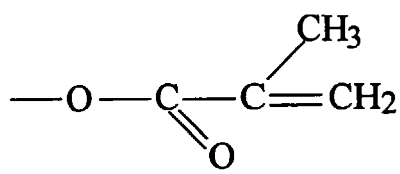

$-NH_2$
$-N_3$
les groupes mercapto pour q=1 et polysulfure ($S_x$) et disulfure ($S_2$) pour q=2 étant préférés.

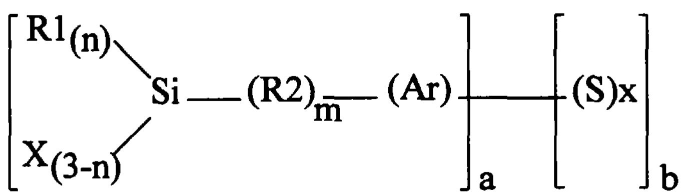
**(XI)**

dans laquelle :

R1 et X répondent à la même définition que celle donnée supra en légende de la formule (X),
$0 \leq n \leq 2$,

(R2) représente un groupe hydrocarboné, divalent, choisi parmi les alkyles et alkylenoxy linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone,

(S)x est un radical polysulfuré divalent, chaque valence libre étant directement liée à un atome de carbone d'un cycle aromatique, plusieurs cycles aromatiques pouvant être reliés entre eux par le radical (S)x,
$2 \leq x \leq 6$,
$a \geq 2$ et $b \geq 1$ avec $0,4 \leq a/b \leq 2$

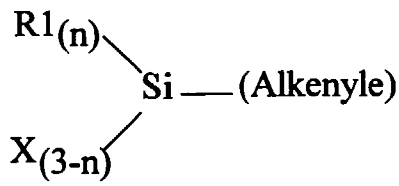

(XII)

dans laquelle :

R1 et X répondent à la même définition que celle donnée supra en légende de la formule (X),

$0 \leq n \leq 2$,

Alkenyle représente un groupe hydrocarboné, linéaire ou ramifié, cyclique ou non, comportant une ou plusieurs doubles liaisons, ayant de 2 à 20 atomes de carbone et de préférence de 2 à 6.

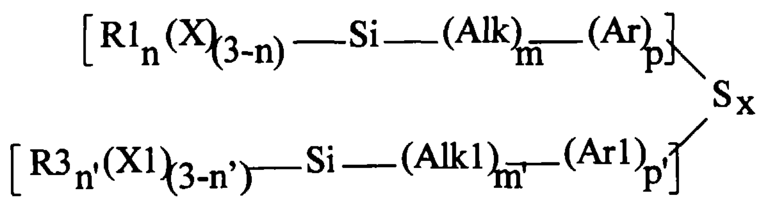

(XIII)

dans laquelle :

les symboles R1, R3, X, X1, Alk, Alk1, n, n', m, m', Ar, Ar1, p et p' sont identiques ou différents et répondent à la même définition que celle donnée supra en légende de la formule (X),

le symbole x est un nombre entier positif de 1 à 8,

avec la condition de ne pas avoir simultanément n = n' ; m = m ' ; p = p' ; X = X1 ; R1 = R3 ; Alk = Alk1 et Ar = Ar1.

**19.** Procédé selon la revendication 17, caractérisé en ce que l'on ajoute d'abord le composé polyorganosiloxane fonctionnalisé puis le composé organosilane.

**20.** Procédé selon la revendication 17, caractérisé en ce que l'organosilane est un mercaptosilane et de préférence le 3-mercaptopropyltriméthoxy-ou triéthoxysilane.

**21.** Enveloppe de pneumatique comprenant une composition de caoutchouc comportant de la silice à titre de charge renforçante et un additif de renforcement caractérisée en ce que l'additif de renforcement est constitué par le mélange et/ou le produit de réaction ⟨⟨in situ⟩⟩ d'au moins un composé polyorganosiloxane fonctionnalisé, comprenant par molécule, au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes de polymère(s).

**22.** Enveloppe de pneumatique selon la revendication 21, caractérisée en ce que le composé polyorganosiloxane fonctionnalisé est choisi parmi les composés suivants :

(A) - les composés comprenant, par molécule,

- $\alpha$ - d'une part, au moins un motif siloxyle fonctionnel de formule:

$$\textbf{(I)} \qquad (R)_a\,Y\,Si\,(O)_{\frac{3-a}{2}}$$

dans laquelle :

a = 0,1 ou 2,

R est un radical hydrocarboné monovalent choisi parmi les alkyles linéaires ou ramifiés, ayant de 1 à 6 atomes de carbone en particulier le méthyle, l'éthyle, le propyle, le butyle, et/ou parmi les aryles et en particulier le phényle, le méthyle étant plus particulièrement préféré, les radicaux R étant identiques ou différents quand a = 2,

Y est un radical alcoxyle linéaire ou ramifié choisi, de préférence, parmi les alcoxyles en $C_1$ - $C_{15}$ , et en particulier $C_1$ - $C_6$ , le méthoxyle, l'éthoxyle et le (iso)propoxyle étant plus particulièrement retenus.

- β - et éventuellement d'autre part, au moins un motif siloxyle fonctionnel de formule:

$$\textbf{(II)} \qquad (R)_b\,W\,Si\,(O)_{\frac{3-b}{2}}$$

dans laquelle :

b = 0,1 ou 2,

R répond à la même définition que celle donnée supra pour le substituant R du motif (I) et peut être identique ou différent de ce dernier,

W est un radical hydrocarboné monovalent ayant de 2 à 30 atomes de carbone et éventuellement des atomes de S et/ou O et constituant un reste fonctionnel, relié au silicium par une liaison Si-C, ce reste étant choisi parmi les groupes suivants :

(i) un groupe alkyle, linéaire ou ramifié, comprenant au moins 7 atomes de carbone,
(2i) un groupe alkényle en $C_2$ - $C_{20}$, linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en α,
(3i) un groupe mono ou polycyclique aliphatique saturé ou insaturé comportant 5 à 20 atomes de carbone et une ou plusieurs double(s) liaison(s) éthyléniques dans le ou les cycles, éventuellement relié au silicium par l'intermédiaire d'un radical alkylène, linéaire ou ramifié, en $C_2$ - $C_{10}$.

- γ - et éventuellement au moins un motif siloxyle (III) de formule suivante:

$$\textbf{(III)} \qquad (R)_c\,(H)_d\,Si\,(O)_{\frac{4-(c+d)}{2}}$$

dans laquelle :
c = 0, 1, 2 ou 3, d = 1 et $c + d \leq 3$
les substituants R étant tels que définis ci-dessus dans les motifs (I) et (II)

(B) - les composés de formule (IV):

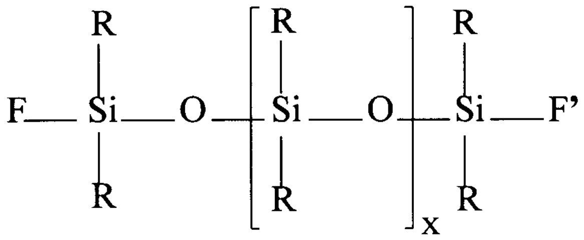 **(IV)**

dans laquelle :

R est un radical hydrocarboné répondant à la même définition que celle de R donnée supra en légende de la formule (I), ou un groupe alkényle en $C_2$-$C_{20}$ linéaire ou ramifié comportant une ou plusieurs doubles liaisons; les différents exemplaires de R peuvent être identiques ou différents entre eux,

x = 0 à 500, de préférence x = 0 à 50

F et F' sont des radicaux monovalents choisis parmi l'hydrogène, les halogènes et préférentiellement le chlore, ceux répondant à la définition de R, et/ou des fonctions hydroxyles, alkoxy, énoxy, acyloxy, plus particulièrement acétoxy, oxime, amine, les fonctions hydroxyles, méthoxy et éthoxy étant plus particulièrement préférées. F et F' peuvent être différents ou identiques, mais dans ce dernier cas il ne peut s'agir du radical R.

( C) - les résines polyorganosiloxanes comportant des radicaux monovalents et/ou des fonctions réactives F et F', ces symboles ayant la même définition que celle donnée supra en légende de la formule (IV), l'organosilane étant choisi parmi les composés répondant aux formules suivantes :

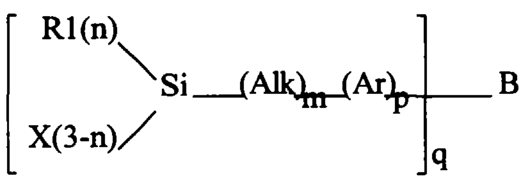 **(X)**

dans laquelle :

R1 représente un groupe alkyle contenant 1 à 10 atome(s) de carbone, ou encore le radical phényle,

X représente un groupe hydrolysable choisi parmi:

- les halogènes, de préférence le chlore et le brome
- les radicaux alkoxy ou cycloalkoxy,
- les radicaux acyloxy,

après hydrolyse, X peut éventuellement représenter un groupe hydroxyle (OH).

$0 \leq n \leq 2$

(Alk) représente un groupe hydrocarboné, divalent, choisi parmi les alkyles linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone, et de préférence 6 à 8,

p représente 0 ou 1, avec la condition que p et m ne soient pas égaux à 0 simultanément,

q = 1 ou 2,

B représente un groupe capable de former une liaison avec au moins un des élastomères de la composition de caoutchouc et particulièrement:

- si q=2 : un groupe fonctionnel polysulfuré choisi parmi les groupes suivants:
  —Sx— avec 1≤ x ≤8, x étant un nombre entier positif

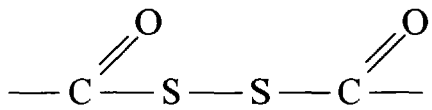

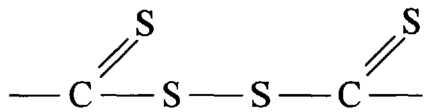

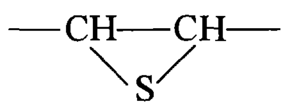

- si q=1 : un groupe fonctionnel choisi parmi les groupes suivants :
  —SH

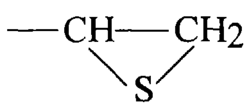

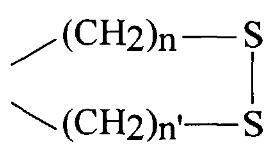

avec 1 ≤ n, n'≤ 6 et n pouvant être égal à n'

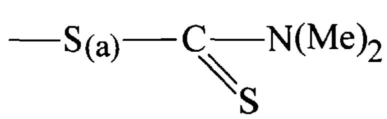

avec 1 ≤ a ≤ 8

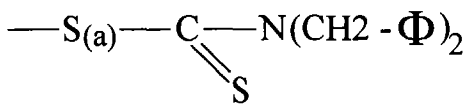

avec 1 ≤ a ≤ 8

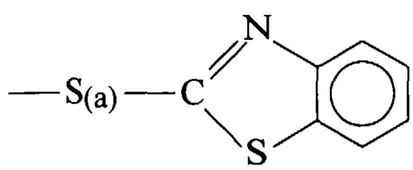

avec 1 ≤ a ≤ 8

—S—Z avec Z étant un reste halogène et de préférence chlorure ou bromure ou une fonction azotée de préférence amine ou amide.

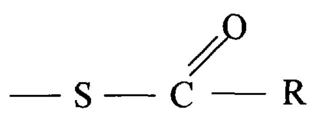

R : alkyle ou alkényle, cycliques ou acycliques, et aryle.

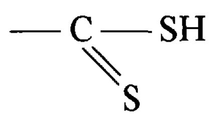

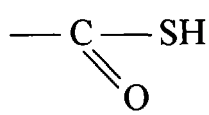

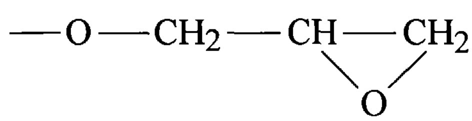

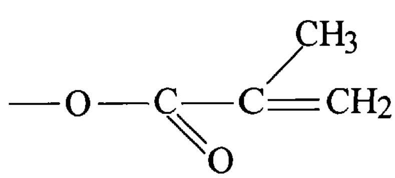

$—NH_2$

$—N_3$

les groupes mercapto pour q=1 et polysulfure ($S_x$) et disulfure ($S_2$) pour q=2 étant préférés.

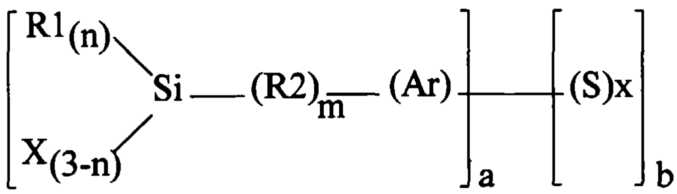

**(XI)**

dans laquelle :

R1 et X répondent à la même définition que celle donnée supra en légende de la formule (X),
$0 \leq n \leq 2$,

(R2) représente un groupe hydrocarboné, divalent, choisi parmi les alkyles et alkylenoxy linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone,

(S)x est un radical polysulfuré divalent, chaque valence libre étant directement liée à un atome de carbone d'un cycle aromatique, plusieurs cycles aromatiques pouvant être reliés entre eux par le radical (S)x,
$2 \leq x \leq 6$,
$a \geq 2$ et $b \geq 1$ avec $0{,}4 \leq a/b \leq 2$

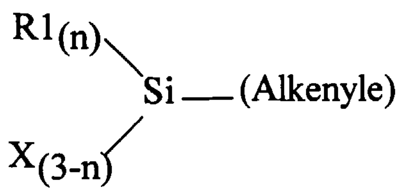

**(XII)**

dans laquelle :

R1 et X répondent à la même définition que celle donnée supra en légende de la formule (X),
$0 \leq n \leq 2$,

Alkenyle représente un groupe hydrocarboné, linéaire ou ramifié, cyclique ou non, comportant une ou plusieurs doubles liaisons, ayant de 2 à 20 atomes de carbone et de préférence de 2 à 6.

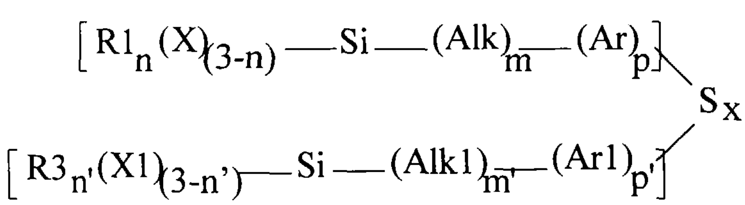

**(XIII)**

dans laquelle :

les symboles R1, R3, X, X1, Alk, Alk1, n, n', m, m', Ar, Ar1, p et p' sont identiques ou différents et répondent à la même définition que celle donnée supra en légende de la formule (X),

le symbole x est un nombre entier positif de 1 à 8,

avec la condition de ne pas avoir simultanément n = n' ; m = m ' ; p = p' ; X = X1 ; R1 = R3 ; Alk = Alk1 et Ar = Ar1.

**23.** Bande de roulement de pneumatique à base d'une composition de caoutchouc comportant de la silice à titre de charge renforçante et un additif de renforcement, caractérisée en ce que l'additif de renforcement est constitué par le mélange et/ou le produit de réaction ⟨⟨in situ⟩⟩ d'au moins un composé polyorganosiloxane fonctionnalisé, comprenant par molécule, au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes de polymère(s).

**24.** Bande de roulement pneumatique selon la revendication 23, caractérisée en ce que le composé polyorganosiloxane fonctionnalisé est choisi parmi les composés suivants :

(A) - les composés comprenant, par molécule,

- $\alpha$ - d'une part, au moins un motif siloxyle fonctionnel de formule:

$$\text{(I)} \qquad (R)_a\, Y\, Si\, (O)_{\frac{3-a}{2}}$$

dans laquelle :

a = 0,1 ou 2,

R est un radical hydrocarboné monovalent choisi parmi les alkyles linéaires ou ramifiés, ayant de 1 à 6 atomes de carbone en particulier le méthyle, l'éthyle, le propyle, le butyle, et/ou parmi les aryles et en particulier le phényle, le méthyle étant plus particulièrement préféré, les radicaux R étant identiques ou différents quand a = 2,

Y est un radical alcoxyle linéaire ou ramifié choisi, de préférence, parmi les alcoxyles en $C_1$ - $C_{15}$ , et en particulier $C_1$ - $C_6$ , le méthoxyle, l'éthoxyle et le (iso)propoxyle étant plus particulièrement retenus.

- $\beta$ - et éventuellement d'autre part, au moins un motif siloxyle fonctionnel de formule:

$$\text{(II)} \qquad (R)_b\, W\, Si\, (O)_{\frac{3-b3}{2}}$$

dans laquelle :

b = 0,1 ou 2,

R répond à la même définition que celle donnée supra pour le substituant R du motif (I) et peut être identique ou différent de ce dernier,

W est un radical hydrocarboné monovalent ayant de 2 à 30 atomes de carbone et éventuellement des atomes de S et/ou O et constituant un reste fonctionnel, relié au silicium par une liaison Si-C, ce reste étant choisi parmi les groupes suivants :

(i) un groupe alkyle, linéaire ou ramifié, comprenant au moins 7 atomes de carbone,

(2i) un groupe alkényle en $C_2$ - $C_{20}$, linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en $\alpha$,

(3i) un groupe mono ou polycyclique aliphatique saturé ou insaturé comportant 5 à 20 atomes de carbone et une ou plusieurs double(s) liaison(s) éthyléniques dans le ou les cycles, éventuellement relié au silicium par l'intermédiaire d'un radical alkylène, linéaire ou ramifié, en $C_2$ - $C_{10}$.

- $\gamma$ - et éventuellement au moins un motif siloxyle (III) de formule suivante:

$$\textbf{(III)} \qquad (R)_c\ (H)_d\ Si\ (O)_{\frac{4-(c+d)}{2}}$$

dans laquelle :

c = 0, 1, 2 ou 3, d = 1 et c + d ≤ 3

les substituants R étant tels que définis ci-dessus dans les motifs (I) et (II)

(B) - les composés de formule (IV):

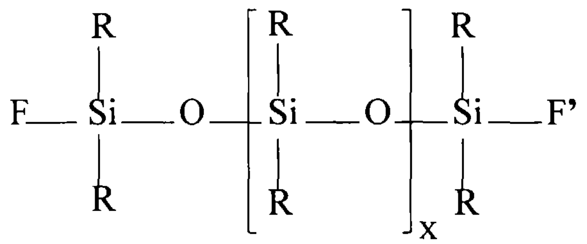

(IV)

dans laquelle :

R est un radical hydrocarboné répondant à la même définition que celle de R donnée supra en légende de la formule (I), ou un groupe alkényle en $C_2$-$C_{20}$ linéaire ou ramifié comportant une ou plusieurs doubles liaisons. Les différents exemplaires de R peuvent être identiques ou différents entre eux,

x = 0 à 500, de préférence x = 0 à 50

F et F' sont des radicaux monovalents choisis parmi l'hydrogène, les halogènes et préférentiellement le chlore, ceux répondant à la définition de R, et/ou des fonctions hydroxyles, alkoxy, énoxy, acyloxy, plus particulièrement acétoxy, oxime, amine, les fonctions hydroxyles, méthoxy et éthoxy étant plus particulièrement préférées. F et F' peuvent être différents ou identiques, mais dans ce dernier cas il ne peut s'agir du radical R.

( C) - les résines polyorganosiloxanes comportant des radicaux monovalents et/ou des fonctions réactives F et F', ces symboles ayant la même définition que celle donnée supra en légende de la formule (IV), l'organosilane étant choisi parmi les composés répondant aux formules suivantes :

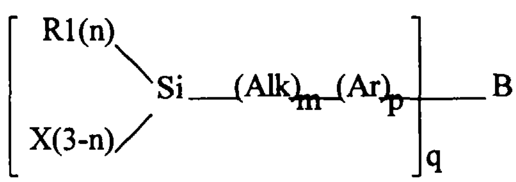

(X)

dans laquelle :

R1 représente un groupe alkyle contenant 1 à 10 atome(s) de carbone, ou encore le radical phényle,

X représente un groupe hydrolysable choisi parmi:

- les halogènes, de préférence le chlore et le brome
- les radicaux alkoxy ou cycloalkoxy,
- les radicaux acyloxy,

après hydrolyse, X peut éventuellement représenter un groupe hydroxyle (OH).

$0 \leq n \leq 2$

(Alk) représente un groupe hydrocarboné, divalent, choisi parmi les alkyles linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone, et de préférence 6 à 8,

p représente 0 ou 1, avec la condition que p et m ne soient pas égaux à 0 simultanément,

q = 1 ou 2,

B représente un groupe capable de former une liaison avec au moins un des élastomères de la composition de caoutchouc et particulièrement:

- si q=2 : un groupe fonctionnel polysulfuré choisi parmi les groupes suivants:
  —Sx— avec $1 \leq x \leq 8$, x étant un nombre entier positif

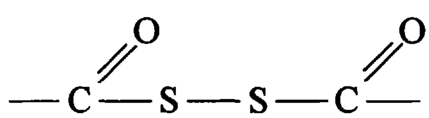

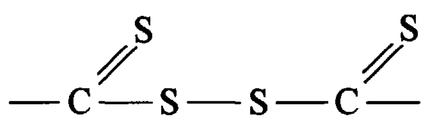

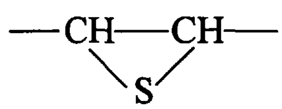

- si q=1 : un groupe fonctionnel choisi parmi les groupes suivants:
  —SH

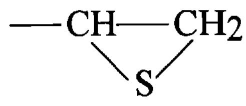

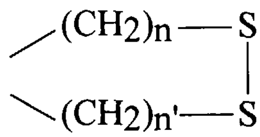

avec 1 ≤ n, n'≤ 6 et n pouvant être égal à n'

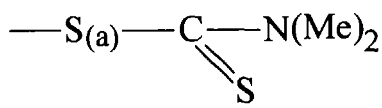

avec 1 ≤ a ≤ 8

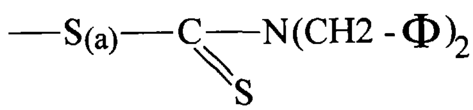

avec 1 ≤ a ≤ 8

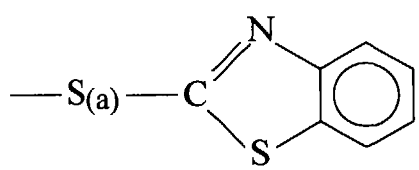

avec 1 ≤ a ≤ 8

—S—Z avec Z étant un reste halogène et de préférence chlorure ou bromure ou une fonction azotée de préférence amine ou amide.

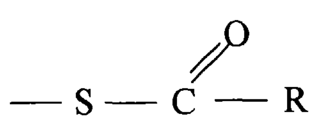

R : alkyle ou alkényle, cycliques ou acycliques, et aryle.

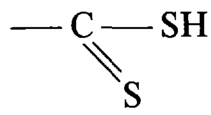

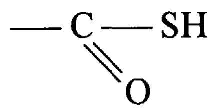

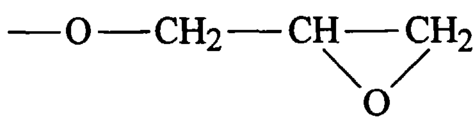

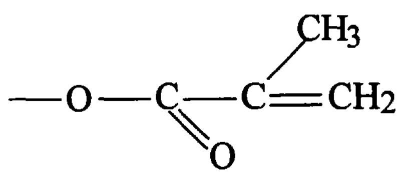

$—NH_2$
$—N_3$
les groupes mercapto pour q=1 et polysulfure ($S_x$) et disulfure ($S_2$) pour q=2 étant préférés.

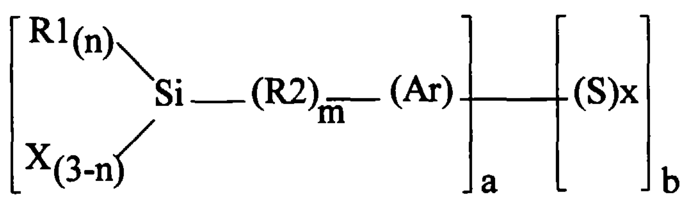

**(XI)**

dans laquelle :

R1 et X répondent à la même définition que celle donnée supra en légende de la formule (X),
$0 \leq n \leq 2$,

(R2) représente un groupe hydrocarboné, divalent, choisi parmi les alkyles et alkylenoxy linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone,

(S)x est un radical polysulfuré divalent, chaque valence libre étant directement liée à un atome de carbone d'un cycle aromatique, plusieurs cycles aromatiques pouvant être reliés entre eux par le radical (S)x,
$2 \leq x \leq 6$,
$a \geq 2$ et $b \geq 1$ avec $0,4 \leq a/b \leq 2$

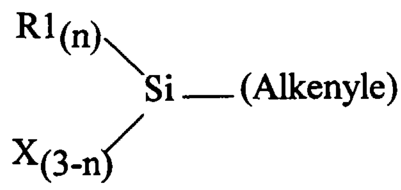

**(XII)**

dans laquelle :

R1 et X répondent à la même définition que celle donnée supra en légende de la formule (X), $0 \leq n \leq 2$,

Alkenyle représente un groupe hydrocarboné, linéaire ou ramifié, cyclique ou non, comportant une ou plusieurs doubles liaisons, ayant de 2 à 20 atomes de carbone et de préférence de 2 à 6.

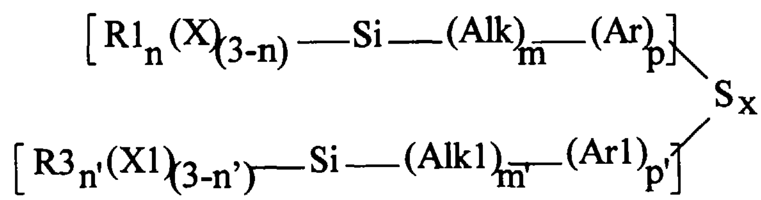

**(XIII)**

dans laquelle :

les symboles R1, R3, X, X1, Alk, Alk1, n, n', m, m', Ar, Ar1, p et p' sont identiques ou différents et répondent à la même définition que celle donnée supra en légende de la formule (X),

le symbole x est un nombre entier positif de 1 à 8,

avec la condition de ne pas avoir simultanément n = n' ; m = m' ; p = p' ; X = X1 ; R1 = R3 ; Alk = Alk1 et Ar = Ar1.

**25.** Utilisation pour la fabrication d'enveloppes de pneumatiques d'une composition de caoutchouc caractérisée en ce qu'elle comporte au moins un élastomère, de la silice à titre de charge renforçante et un additif de renforcement constitué par le mélange et/ou le produit de réaction ⟨⟨in situ⟩⟩ d'au moins un composé polyorganosiloxane fonctionnalisé, comprenant par molécule, au moins un motif siloxyle fonctionnel capable de se lier chimiquement et/ou physiquement avec les sites hydroxyles de surface des particules de silice et au moins un composé organosilane fonctionnalisé comportant, par molécule, au moins un groupe fonctionnel capable de se lier chimiquement et/ou physiquement avec le polyorganosiloxane et/ou les sites hydroxylés des particules de silice et au moins un autre groupe fonctionnel capable de se lier chimiquement et/ou physiquement aux chaînes de polymère(s).

**26.** Utilisation selon la revendication 25, caractérisée en ce que le composé polyorganosiloxane fonctionnalisé est choisi parmi les composés suivants :

(A) - les composés comprenant, par molécule,

- $\alpha$ - d'une part, au moins un motif siloxyle fonctionnel de formule:

$$(I) \qquad (R)_a Y Si (O)_{\frac{3-a}{2}}$$

dans laquelle :

a = 0,1 ou 2,

R est un radical hydrocarboné monovalent choisi parmi les alkyles linéaires ou ramifiés, ayant de 1 à 6 atomes de carbone en particulier le méthyle, l'éthyle, le propyle, le butyle, et/ou parmi les aryles et en particulier le phényle, le méthyle étant plus particulièrement préféré, les radicaux R étant identiques ou différents quand a = 2,

Y est un radical alcoxyle linéaire ou ramifié choisi, de préférence, parmi les alcoxyles en $C_1$ - $C_{15}$ , et en particulier $C_1$ - $C_6$ , le méthoxyle, l'éthoxyle et le (iso)propoxyle étant plus particulièrement retenus.

- β - et éventuellement d'autre part, au moins un motif siloxyle fonctionnel de formule:

$$(II) \qquad (R)_b W Si (O)_{\frac{3-b}{2}}$$

dans laquelle :

b = 0,1 ou 2,

R répond à la même définition que celle donnée supra pour le substituant R du motif (I) et peut être identique ou différent de ce dernier,

W est un radical hydrocarboné monovalent ayant de 2 à 30 atomes de carbone et éventuellement des atomes de S et/ou O et constituant un reste fonctionnel, relié au silicium par une liaison Si-C, ce reste étant choisi parmi les groupes suivants :

(i) un groupe alkyle, linéaire ou ramifié, comprenant au moins 7 atomes de carbone,
(2i) un groupe alkényle en $C_2$ - $C_{20}$, linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en α,
(3i) un groupe mono ou polycyclique aliphatique saturé ou insaturé comportant 5 à 20 atomes de carbone et une ou plusieurs double(s) liaison(s) éthyléniques dans le ou les cycles, éventuellement relié au silicium par l'intermédiaire d'un radical alkylène, linéaire ou ramifié, en $C_2$ - $C_{10}$.

- γ - et éventuellement au moins un motif siloxyle (III) de formule suivante:

$$(III) \qquad (R)_c (H)_d Si (O)_{\frac{4-(c+d)}{2}}$$

dans laquelle :
$c = 0, 1, 2$ ou 3, $d = 1$ et $c + d \leq 3$ les substituants R étant tels que définis ci-dessus dans les motifs (I) et (II)

(B) - les composés de formule (IV):

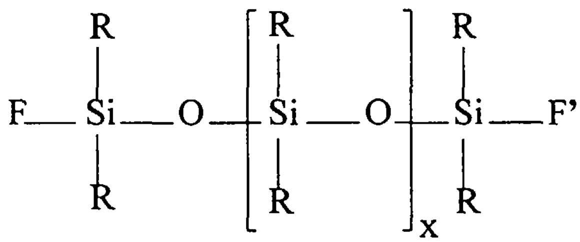 **(IV)**

dans laquelle :

R est un radical hydrocarboné répondant à la même définition que celle de R donnée supra en légende de la formule (I), ou un groupe alkényle en $C_2$-$C_{20}$ linéaire ou ramifié comportant une ou plusieurs doubles liaisons; les différents exemplaires de R peuvent être identiques ou différents entre eux,

x = 0 à 500 de préférence x = 0 à 50,

F et F' sont des radicaux monovalents choisis parmi l'hydrogène, les halogènes et préférentiellement le chlore, ceux répondant à la définition de R, et/ou des fonctions hydroxyles, alkoxy, énoxy, acyloxy, plus particulièrement acétoxy, oxime, amine, les fonctions hydroxyles, méthoxy et éthoxy étant plus particulièrement préférées. F et F' peuvent être différents ou identiques, mais dans ce dernier cas il ne peut s'agir du radical R.

( C) - les résines polyorganosiloxanes comportant des radicaux monovalents et/ou des fonctions réactives F et F', ces symboles ayant la même définition que celle donnée supra en légende de la formule (IV).

**27.** Utilisation selon la revendication 25, caractérisée ce que l'organosilane fonctionnalisé est choisi parmi les composés répondant aux formules suivantes :

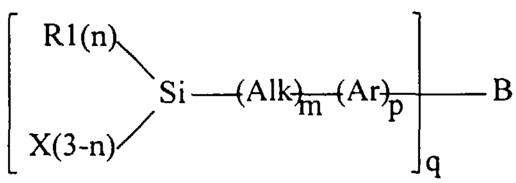 **(X)**

dans laquelle :

R1 représente un groupe alkyle contenant 1 à 10 atome(s) de carbone, ou encore le radical phényle,

X représente un groupe hydrolysable choisi parmi:

- les halogènes, de préférence le chlore et le brome
- les radicaux alkoxy ou cycloalkoxy,
- les radicaux acyloxy,

après hydrolyse, X peut éventuellement représenter un groupe hydroxyle (OH).
$0 \leq n \leq 2$

(Alk) représente un groupe hydrocarboné, divalent, choisi parmi les alkyles linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone, et de préférence 6 à 8,

p représente 0 ou 1, avec la condition que p et m ne soient pas égaux à 0 simultanément,

q = 1 ou 2,

B représente un groupe capable de former une liaison avec au moins un des élastomères de la composition de caoutchouc, et particulièrement:

- si q=2 : un groupe fonctionnel polysulfuré choisi parmi les groupes suivants:
  —Sx— avec $1 \leq x \leq 8$, x étant un nombre entier positif

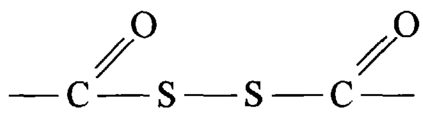

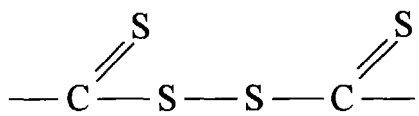

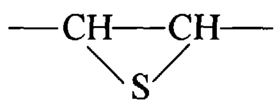

- si q=1 : un groupe fonctionnel choisi parmi les groupes suivants:
  —SH

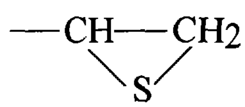

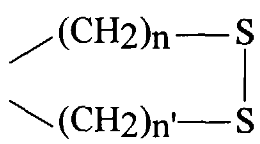

avec $1 \leq n, n' \leq 6$ et n pouvant être égal à n'

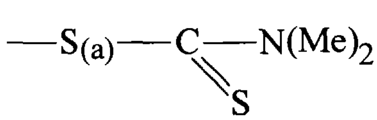

avec $1 \leq a \leq 8$

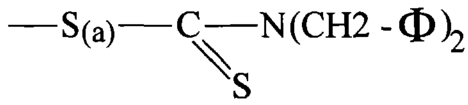

avec 1 ≤ a ≤ 8

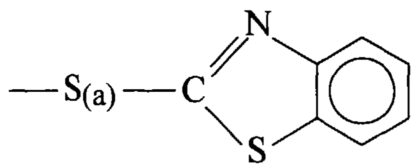

avec 1 ≤ a ≤ 8

—S—Z avec Z étant un reste halogène et de préférence chlorure ou bromure ou une fonction azotée de préférence amine ou amide.

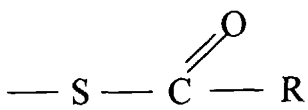

R : alkyle ou alkényle, cycliques ou acycliques, et aryle.

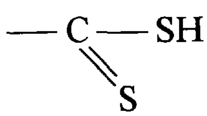

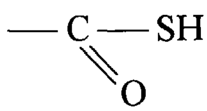

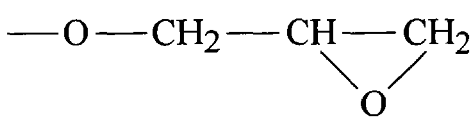

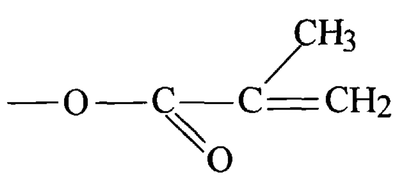

$—NH_2$

$—N_3$

les groupes mercapto pour q=1 et polysulfure ($S_x$) et disulfure ($S_2$) pour q=2 étant préférés.

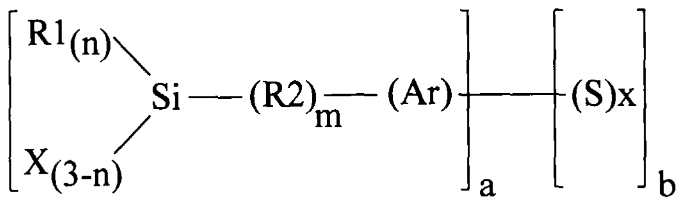

(XI)

dans laquelle :

R1 et X répondent à la même définition que celle donnée supra en légende de la formule (X),
$0 \leq n \leq 2$,

(R2) représente un groupe hydrocarboné, divalent, choisi parmi les alkyles et alkylenoxy linéaires ou ramifiés, ayant de 1 à 10 atomes de carbone et avantageusement de 1 à 6,

m représente 0 ou 1,

(Ar) représente un groupe hydrocarboné, choisi parmi les aryles, ayant de 6 à 12 atomes de carbone,

(S)x est un radical polysulfuré divalent, chaque valence libre étant directement liée à un atome de carbone d'un cycle aromatique, plusieurs cycles aromatiques pouvant être reliés entre eux par le radical (S)x,
$2 \leq x \leq 6$,
$a \geq 2$ et $b \geq 1$ avec $0,4 \leq a/b \leq 2$

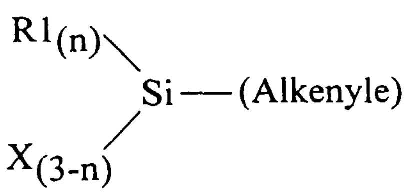

(XII)

dans laquelle :

R1 et X répondent à la même définition que celle donnée supra en légende de la formule (X),
$0 \leq n \leq 2$,

Alkenyle représente un groupe hydrocarboné, linéaire ou ramifié, cyclique ou non, comportant une ou plusieurs doubles liaisons, ayant de 2 à 20 atomes de carbone et de préférence de 2 à 6.

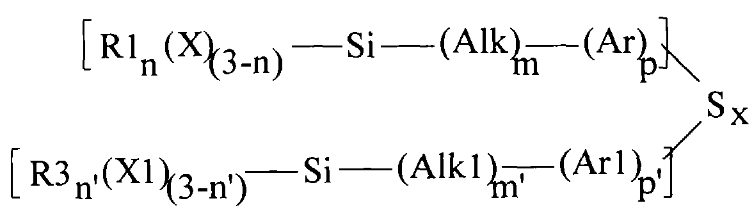

(XIII)

dans laquelle :

les symboles R1, R3, X, X1, Alk, Alk1, n, n', m, m', Ar, Ar1, p et p' sont identiques ou différents et répondent à la même définition que celle donnée supra en légende de la formule (X),

le symbole x est un nombre entier positif de 1 à 8,

avec la condition de ne pas avoir simultanément n = n' ; m = m' ; p = p' ; X = X1 ; R1 = R3 ; Alk = Alk1 et Ar = Ar1.

**28.** Enveloppe de pneumatique comprenant une composition de caoutchouc à base d'au moins un élastomère, ayant de la silice à titre de charge renforçante, caractérisée en ce qu'elle comprend à titre d'agent de recouvrement un composé polyorganosiloxane fonctionalisé comprenant, par molécule, au moins un motif siloxyle fonctionnel capable de se lier chimiquement et/ou physiquement avec les sites hydroxyles de surface des particules de silice et au moins un autre groupe fonctionnel capable de se lier chimiquement et/ou physiquement aux chaînes de polymère(s).

FIGURE N°1

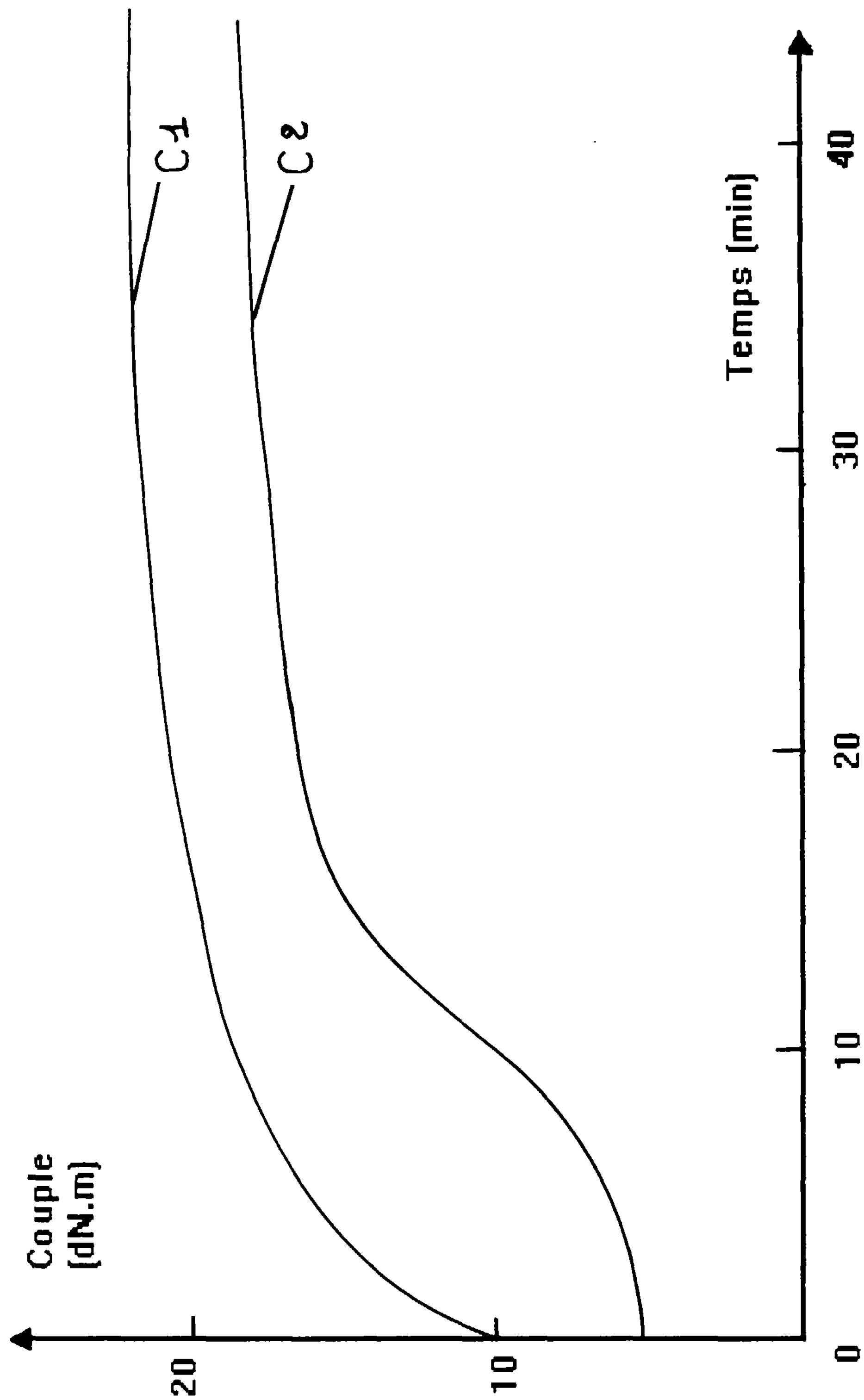

FIGURE N°2

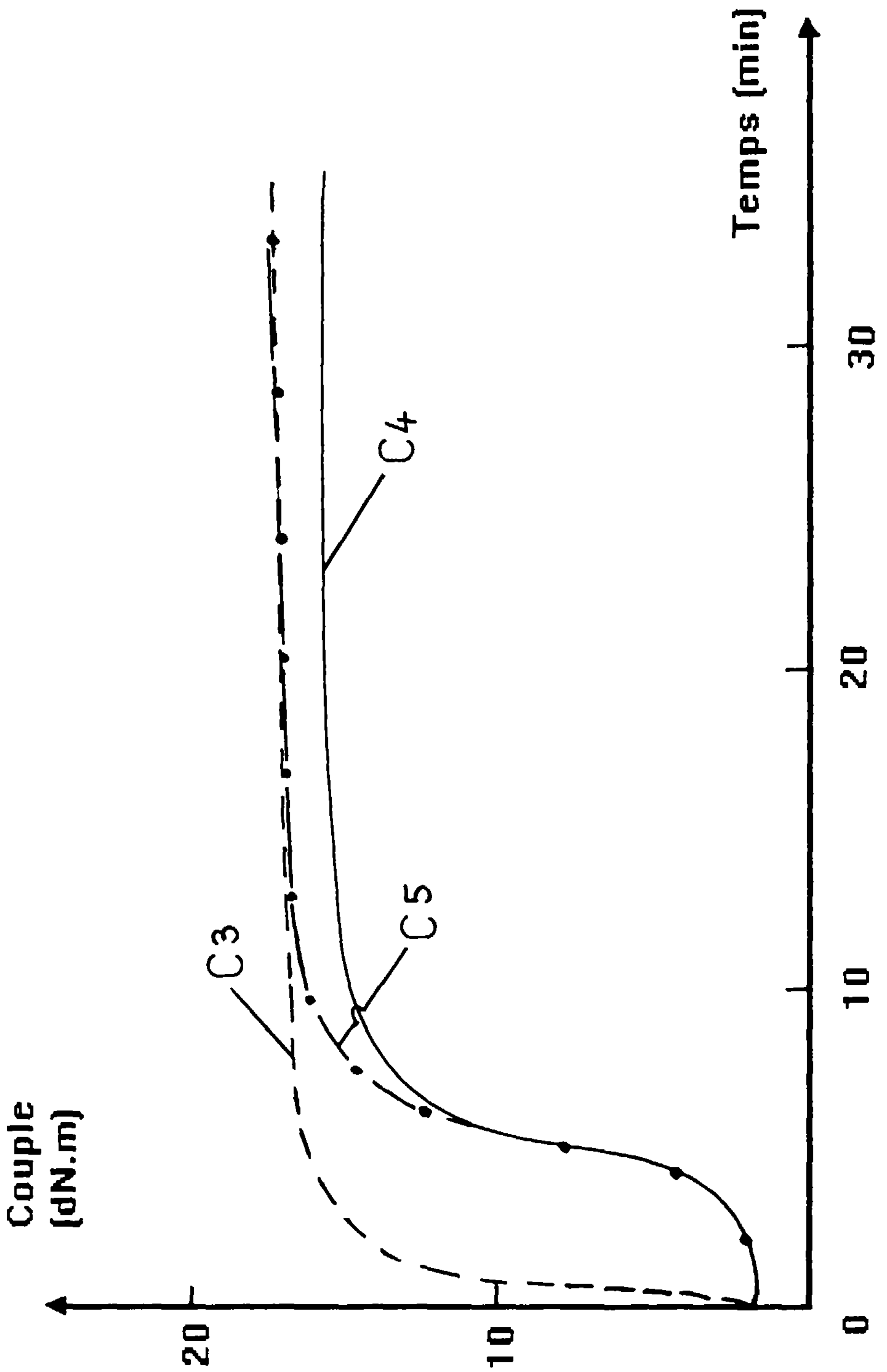

FIGURE N°3

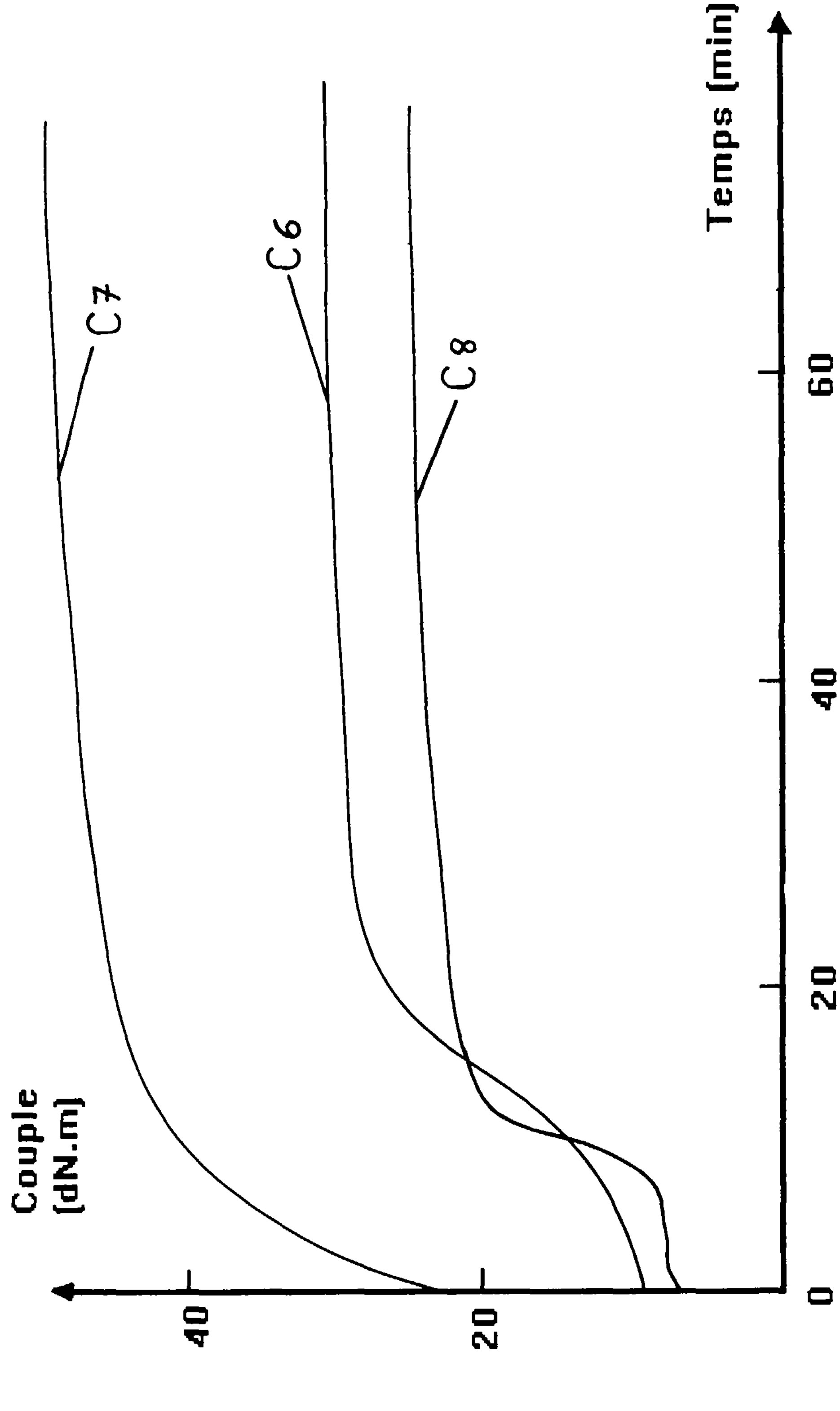

FIGURE N°4

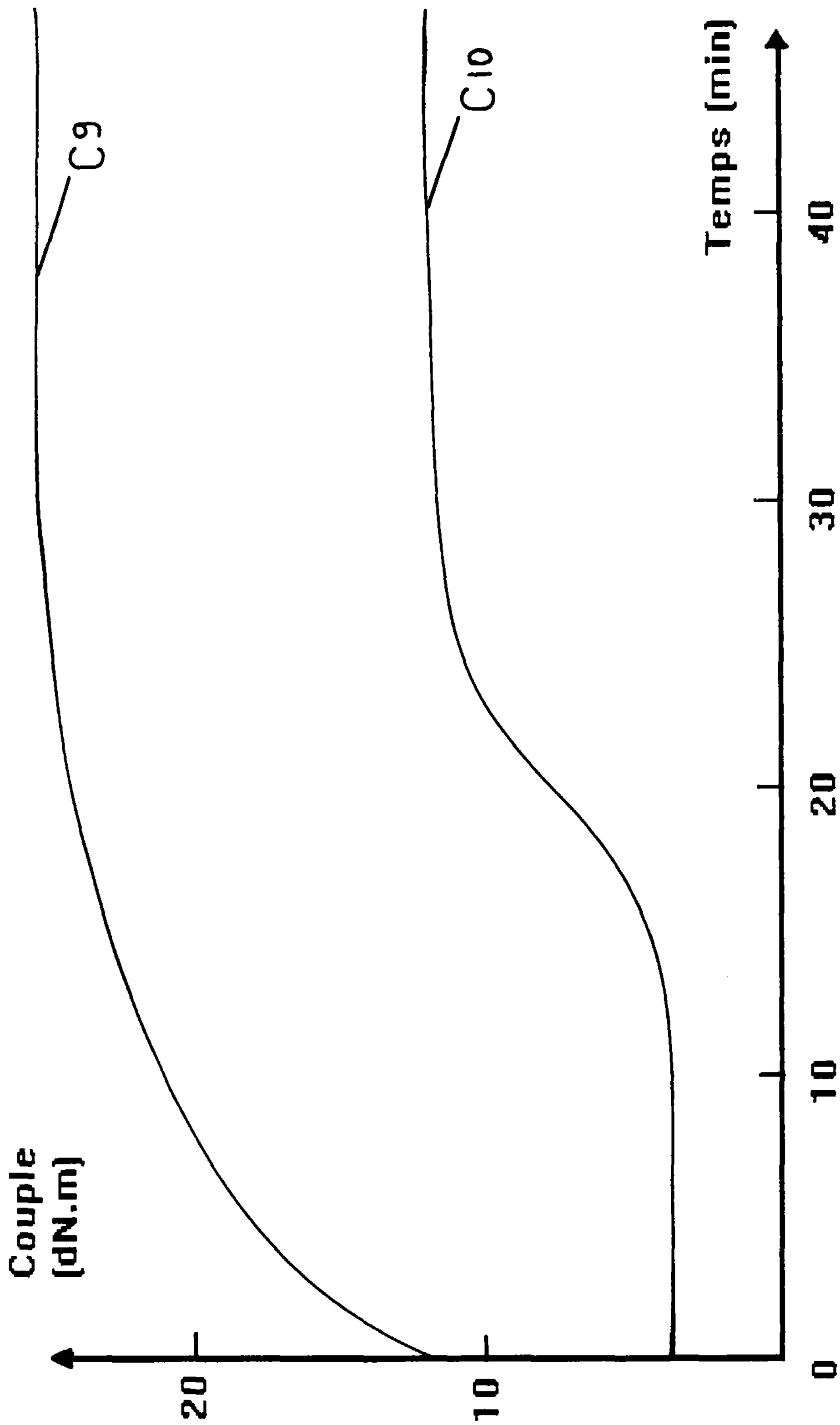

Office européen des brevets

# RAPPORT DE RECHERCHE EUROPEENNE

Numero de la demande
EP 97 10 0105

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 191 929 A (HUELS CHEMISCHE WERKE AG) 27 Août 1986<br>* page 5, ligne 19 - ligne 30; revendication 2 *<br>--- | | C08L21/00<br>C08K5/54<br>C08K3/36<br>B60C1/00 |
| A | DE 28 37 117 A (SHINETSU CHEMICAL CO) 15 Mars 1979<br>* revendication 1 *<br>--- | | |
| A | DE 29 33 247 A (SHINETSU CHEMICAL CO) 6 Mars 1980<br>* revendication 1 *<br>--- | | |
| D,A | FR 2 094 859 A (PPG INDUSTRIES, INC.) 4 Février 1972<br>* revendication 1 *<br>----- | | |
| | | | DOMAINES TECHNIQUES RECHERCHES (Int.Cl.6) |
| | | | C08L<br>C08K<br>B60C |

Le présent rapport a été établi pour toutes les revendications

| Lieu de la recherche | Date d'achèvement de la recherche | Examinateur |
|---|---|---|
| LA HAYE | 26 Mars 1997 | Van Humbeeck, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)